# EUROPEAN PATENT APPLICATION

(11) **EP 1 983 463 A1**
(43) Date of publication of application: **22.10.2008**
(21) Application number: 06730912.0
(22) Date of filing: 31.03.2006
(51) Int. Cl.: G06F 21/20

(54) **IDENTIFICATION MANAGEMENT SYSTEM FOR ELECTRONIC DEVICE AUTHENTICATION**

(30) Priority: 23.12.2005 JP 2005371191
(71) Applicant: MATSUSHITA ELECTRIC INDUSTRIAL CO., LTD., Osaka 571-8501 (JP)
(72) Inventor: TOJO, Masaaki c/o Matsushita Electric Industrial Co., Ltd Intellectual Property Rights Operations Company, Osaka 540-6207 (JP); FUKUI, Kohtaro c/o Matsushita Electric Industrial Co., Ltd Intellectual Property Rights Operations Company, Osaka 540-6207 (JP); TOMITA, Koji c/o Matsushita Electric Industrial Co., Ltd Intellectual Property Rights Operations Company, Osaka 540-6207 (JP)
(74) Representative: Schöniger, Franz-Josef
(86) International application number: PCT/JP2006/306964
(87) International publication number: WO 2007/072585

(57) **Abstract**

In the conventional vertical integration system management form, it is impossible or difficult to limit the electronic device function or format when providing a service to an electronic device which is judged by a judgment server of an administrator of the service providing system with whom a service provider has not concluded a contract. To cope with this, a fallowing system is suggested. That is, according to a use request from a first electronic device to a second judgment server, an identification management server which has received a guarantee request outputted from a first judgment server searches an identification management unit for managing information including the electronic device identifiers. According to the search result, a guarantee is outputted. According to the guarantee, the first judgment server outputs a guaranteed service request to the second judgment server. Thus, it is possible to provide a more flexible service provision environment by cooperating the user identification management with other vertical integration type system management form.

## Description

### BACKGROUND OF THE INVENTION

### Field of the Invention

The present invention relates to an identification management system for authentication of electronic devices.

### Description of the Related Art

In Japanese Unexamined Patent Application Publication No. 2004-227055, a service providing system provides service requested from electronic device, and processes settlement for the provided service. In such service providing system, a so-called vertically-integrated management format is normally used. Therefore, a manager of the service providing format manages a determination server for authenticating an electronic apparatus, and service provider who provides the service with the electronic apparatus makes a contract with the manager of the service providing system, and provides the service only with the electronic apparatus authenticated by the determination server. According to such a management format, it is possible to provide the service only with the electronic apparatus authenticated by the determination server managed by the manager of the service providing system, so that for the manager of the service providing system, it is possible to ensure the collection of fee for the service from the owner of the electronic apparatus, and for the service provider, it is possible to ask the manager of the service providing system to collect the fee for the service.

Patent document: Japanese Unexamined Patent Application Publication No. 2004-227055

However, in the conventional vertically-integrated system, since authentication for the settlement of payment for service provision is carried out only with respect to each apparatus receiving the service, for example, in cases where a user desires to pay by another user's terminal apparatus through a credit card company or a bank account, the above system cannot be utilized, thereby causing inconveniences for the user.

Further, in the conventional vertically-integrated management form, even if a user receives a service via an electronic apparatus for the service provision system, it is difficult for the user to receive the same service via another electronic apparatus for another service provision system. The reason for this is that, conventionally, electronic apparatuses vary according to the service provision system, so that the user of different electronic apparatuses is regarded as a different user. Therefore, it cannot be determined that the user of the electronic apparatus is the same user, and the above described problem of charging arises.

In addition, for example, in the case of downloading service for data such as software or music data, it is necessary to download data in accordance with the type, function, or format etc. regarding the electronic apparatus. However, it is impossible to know the type, function, or format etc. regarding the electronic apparatus, which receives a service from a certain service provision system, from other service provision systems across boundaries of the service provision systems. This applies not only to downloading of data but also to general service provision via communication.

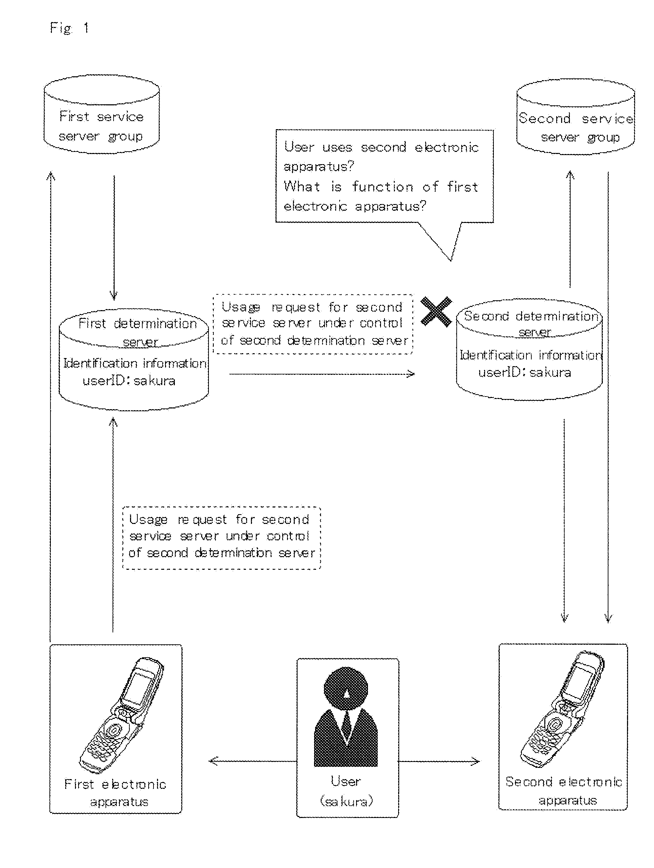

Fig. 1 is a diagram showing a case where a service request is done across boundaries of the service provision systems in the conventional technology. In the case of service request by using the electronic apparatus, conventionally, the service is provided from the service server group based on the determination by the determination server in the same system. For example, in Fig. 1, based on a determination by the first determination server, the service is provided from the first service server group to the first electronic apparatus, and based on a determination by the second determination server, the service is provided from the second service server group to the second electronic apparatus.

In such case, the user operates the first electronic apparatus, thereby sending a usage request for the second service server under control of the second determination server from the first electronic apparatus to the first determination server in order to receive the service from the second service server group based on a determination by the second determination server. Hereat, even if the usage request is sent from the first determination server to the second determination server, the second determination server cannot determine whether the user has a contract with the system of the second determination server, and can receive the service. Further, it is impossible to know the type, function, or format etc. regarding the first electronic apparatus, and to know whether the first electronic apparatus is suitable to receive a service. Therefore, there is a problem that even if the service request is sent across boundaries of the service provision systems, it is impossible to provide the service in response to the request.

Therefore, even if the user can receive service from a certain service system via an electronic apparatus ('electronic apparatus 1'), and the user has a contract with another service system and can receive service via another electronic apparatus, it is not authorized that the user can receive the service provision via the electronic apparatus 1 from another service system.

### SUMMARY OF THE INVENTION

In order to solve the above deficiency, the present invention provides a system, in which based on a usage request for the second determination server from the first electronic apparatus, search of a management unit for identification, which manages the shared identification information of the user correlated with the identification information of electronic apparatus used by the user, is carried out, thereby outputting proof indicating that the shared identification information and the identification information of electronic apparatus are managed. The first determination server is capable of outputting a service request with proof to a second determination server based on this proof.

In another aspect of the present invention, the management unit for identification manages type, function, or format etc. regarding the electronic apparatus, so that it is possible to include information indicating the type, function, or format etc. regarding the electronic apparatus in the service request with proof, and the second determination server can carry out a determination so as to provide the service to a certain scope of electronic apparatuses by means of the type, function, or format etc. regarding the electronic apparatus.

In another aspect of the present invention, based on a usage request for the second determination server from the first electronic apparatus, the management server for identification, which has received a service request with proof request outputted from the first determination server, carries out the search of a management unit for identification, which manages the shared identification information of the user correlated with the identification information of electronic apparatus used by the user, thereby outputting the service request with proof from the management server for identification itself to the second determination server based on the search.

In another aspect of the present invention, based on a usage request for the second determination server from the first electronic apparatus, the second determination server, which has received the service request from the first determination server, may output the proof request to the management server for identification. In response to this, the management server for identification may carry out a search of a management unit for identification, which manages the shared identification information of the user correlated with the identification information of electronic apparatus used by the user, thereby outputting proof to the second determination server based on the search result.

According to the above configuration, it becomes possible to uniquely identify the user, who uses a plurality of electronic apparatuses, without depending on the identification information of electronic apparatus, and to correlate the shared identification information of the user with the identification information of electronic apparatus used by the user. Therefore, it becomes unnecessary that one electronic apparatus is bound by one service system, thereby removing boundaries between service systems. Accordingly, it is possible to use a plurality of service systems across boundaries by using only one electronic apparatus. In addition, for the service provider, it is possible to appropriately provide the service to the electronic apparatus belonging to a plurality of service systems. The term 'appropriately' means that the service is provided only to the electronic apparatus belonging to a scope of the type, function, or format etc. desired by the service provider.

### DETAILED DESCRIPTION OF THE PREFERRED EMBODIMENTS

Embodiments of the present invention will be described hereinbelow with reference to the drawings. The present invention is not to be limited to the above embodiments and able to be embodied in various forms without departing from the scope thereof.

Note that the first embodiment will mainly describe Claims 1, 2, 7, 8 and 9, Moreover, the third embodiment will mainly describe Claims 3, 4, 10, 11, and 12. Moreover, the second embodiment will mainly describe Claims 5, 6, 13, 14, 15, and 16.

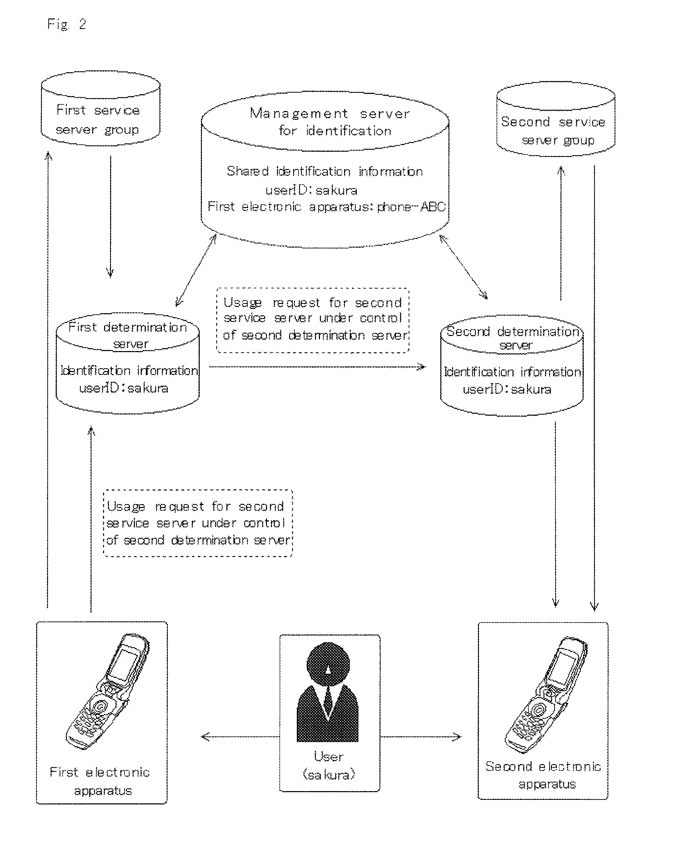

Fig. 2 is a conceptual diagram of the present invention. The present invention is a system comprising service server groups, electronic apparatuses, determination servers, and management server for identification. The each vertically-integrated management system includes the first service provision system comprising first electronic apparatus used, first service server group, and first determination server, and the second service provision system comprising second electronic apparatus, second service server group, and second determination server. In addition, the management server for identification accessible from the first service provision system and the second service provision system is comprised. Compared with Fig. 1, Fig. 2 has a difference regarding the management server for identification. In the management server for identification, the shared identification information of the user correlated with the identification information of first electronic apparatus is stored, so that it is possible to use a plurality of service systems across boundaries by using only one electronic apparatus.

### «First embodiment»

The first embodiment will be described hereinafter. In the first embodiment, based on a usage request for the second determination server from the first electronic apparatus, the management unit for identification, which has received the first proof request outputted by the first determination server, carries out search of a management unit for identification, thereby outputting the proof based in the search result.

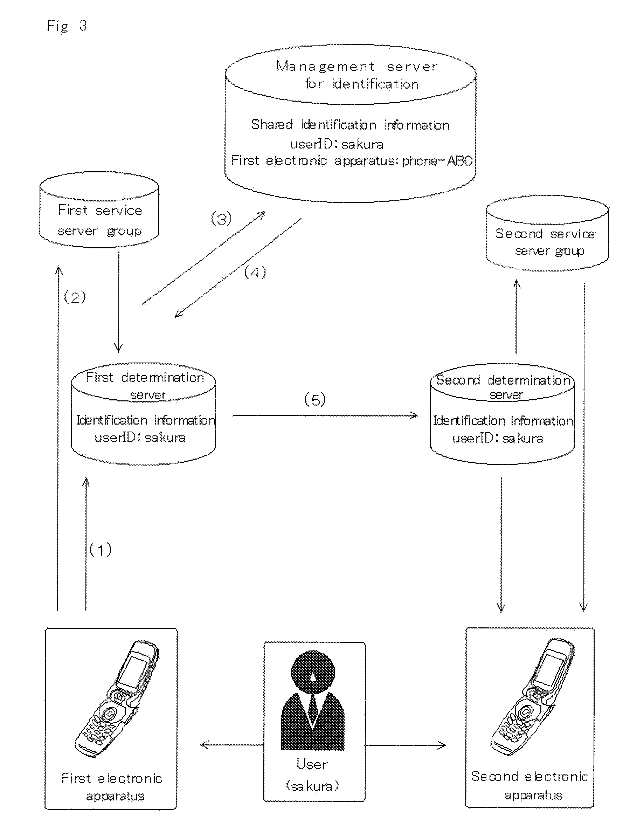

Fig. 3 is a conceptual diagram showing the first embodiment. Fig. 3 shows a relation between the respective servers and apparatuses configuring the system of the first embodiment. The first electronic apparatus and the second electronic apparatus are used by the one user A. The respective electronic apparatuses can receive various services such as internet browsing or reproducing content from a service server. In order to receive the service, a user preliminarily registers the shared identification information with the management server for identification. Further, the user is required to register the shared identification information to the respective determination servers.

At the outset, the first determination server receives the usage request for the second service server under control of the second determination server from the first electronic apparatus (1). Note that the usage request may be received via the first service server (2). Subsequently, the first determination server outputs the first proof request including the shared identification information based on the usage request (3). This is for acquiring information, proving that the shared identification information (userID:sakura) is unique identification information in the system, and proving the function of the first electronic apparatus, from the management server for identification. Subsequently, the management server for identification searches the management unit based on the first proof request outputted by the first determination server, and outputs the first proof based on a search result (4).

The first determination server outputs a service request with proof including the shared identification information based on the first proof from the management server for identification (5). Here, the second determination server receives the service request with proof, confirms the proof, and provides the service in response to the received service request. Further, based on the service request with proof, the shared identification information of the user and the identification information of second electronic apparatus may be correlated and stored, and may be searched by means of the shared identification information as a key.

As content of confirmation of the proof, it is confirmed whether the user of the first electronic apparatus has a contract with the service system of the second determination server, and whether the first electronic apparatus has a function of receiving the service provision by the second service server.

### <Configuration of First Embodiment>

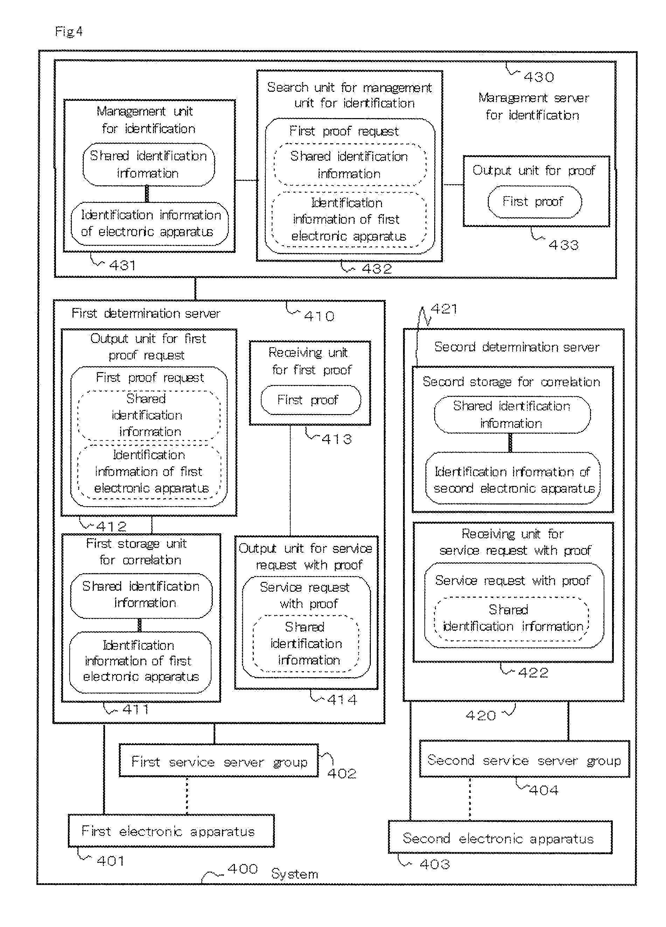

Fig. 4 is a functional block diagram of a system (400) of the first embodiment. Therefore, a system (400) of the first embodiment comprises a first service server group (402), which provides a first service to a first electronic apparatus (401) based on a first determination, a second service server group (404), which provides a second service to a second electronic apparatus (403) based on a second determination, the first electronic apparatus (401), which is used by a user, and receives the first service from the first service server group (402), the second electronic apparatus (403), which is used by user, and receives the second service from the second service server group (404), a first determination server (410), which carries out a first determination of the first electronic apparatus (401) based on identification information of first electronic apparatus in order to receive the first service from the first service server group (402), a second determination server (420), which carries out a second determination of the second electronic apparatus (403) based on identification information of second electronic apparatus in order to receive said second service from the second service server group (404), and a management server for identification (430), in which a management unit for identification (431) manages the shared identification information for uniquely identifying the user in the system correlated with the identification information of electronic apparatus used by the user.

Each of the 'first determination' and the 'second determination' is a determination carried out by the first determination server (410) or the second determination server (420) on authenticity of the identification information of electronic apparatus sent by the first electronic apparatus (401) or by the second electronic apparatus (403) as a receiver of the first or second service. The 'identification information of electronic apparatus' is information for uniquely identifying an electronic apparatus. For example, production number of the electronic apparatus is included. The production number may be formed by combining a portion for identifying a manufacturer of the electronic apparatus with a portion indicating a manufacturer's production number. Further, in cases where the electronic apparatus is a mobile phone, the identification information of electronic apparatus corresponds to a phone number or a number uniquely identifying the mobile phone in a mobile phone network. Further, the identification information of electronic apparatus may include information for identifying a user.

The 'first service' and the 'second service' are services respectively provided by the first service server group (402) or by the second service server group (404). Example of the usage include browsing of content such as webpage of the internet, browsing of content managed by the first service server group (402) or by the second service server group (404), or communication such as transmission/reception of an e-mail. Further, it is not necessary for the service to be a simple one, and may include a plurality of items. The reason for using the terms 'first service server group' and 'second service server group' is that a plurality of service servers may exist for the plurality of service items. Additionally, the first service server group and the second service server group may be configured in one server. Note that the first identification information of electronic apparatus and the second identification information of electronic apparatus are the identification information of electronic apparatus of the first electronic apparatus (401) and the second electronic apparatus (403), respectively.

Note that basically the same expression is used for terms having the same meaning. However, the reference codes for drawings may differ.

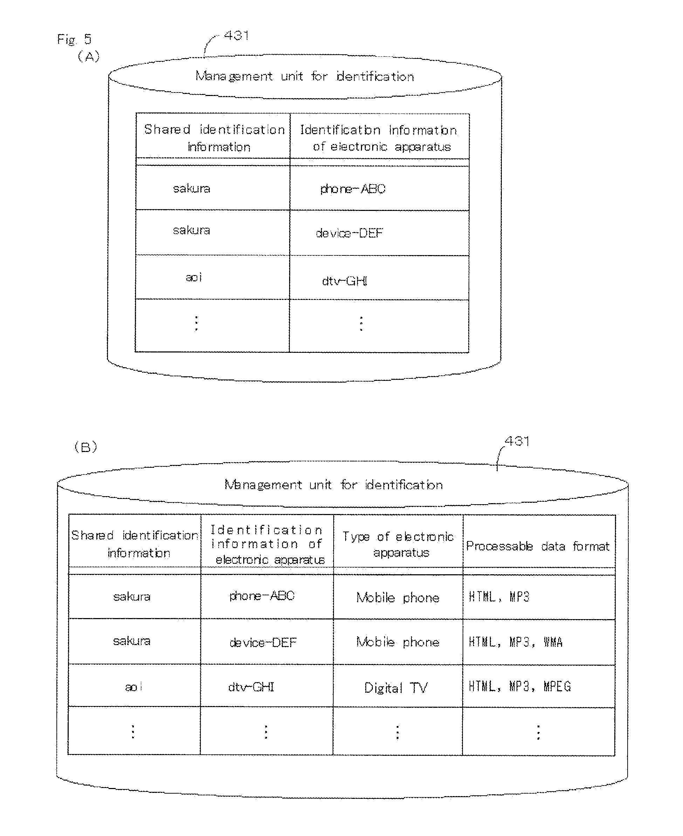

Fig. 5 is a diagram showing an example of information stored and managed by a management unit for identification (431) of a management server for identification (430). In Fig. 5, such information is expressed in a form of being stored in a table. The management unit for identification (431) manages the shared identification information for uniquely identifying the user in the system correlated with the identification information of electronic apparatus used by the user.

In Fig. 5(A), in order to manage the shared identification information correlated with the identification information of electronic apparatus used by the user, a row in the table is provided with respect to each identification information of electronic apparatus, and the shared identification information and the identification information of electronic apparatus are stored therein, so that it is indicated that the user identified by the shared identification information can use the electronic apparatus identified by the identification information of electronic apparatus. For example, Fig. 5(A) shows that the user identified as 'sakura' owns the electronic apparatus identified by 'phone-ABC' and 'device-DEF'.

Hereinafter, by the identification information of electronic apparatus such as 'phone-ABC' and 'device-DEF', the electronic apparatus is uniquely identified, and the user of the electronic apparatus can be specified. In cases where a plurality of electronic apparatuses used by different uses have the same identification information of electronic apparatus, by adding the identification information of the user to the identification information of electronic apparatus, the identification information of electronic apparatus can be used as the identification information for uniquely identifying the electronic apparatus.

In addition, in the management server for identification (430), the management server for identification (431) may manage the type, function, or format regarding the electronic apparatus with respect to each electronic apparatus identified by the identification information of electronic apparatus. Therefore, a row including correspondence of the identification information of electronic apparatus and the type, function, or format regarding the electronic apparatus may exist in a table, or such row may be managed in another table. The type, function, or format etc. regarding the electronic apparatus include more than or equal to one of a distinction as to whether the electronic apparatus is a portable type or fixed type, a distinction as to whether the electronic apparatus is a mobile phone, PDA (Personal Digital Assistance), a personal computer, or a digital appliance such as a digital TV, or a hardware configuration of the electronic apparatus, name of software installed in the electronic apparatus or a data format

Fig. 5(B) shows a case where the table of Fig. 5(A) further includes a row indicating the type, function, or format etc. regarding the electronic apparatus. In addition, manufacturer's name of the electronic apparatus, time of manufacture, distributor, or area in which the electronic apparatus is available etc. may be included. In Fig. 5(B), for example, it is indicated that phone-ABC used by the user identified as 'sakura' is a mobile phone, and can process data in HTML and MP3 format, and dtv-GHI used by the user identified as 'aoi' is a digital TV, and can process data in HTML, MP3, and MPEG format.

In cases where an inquiry as to the phone-ABC used by the user identified as 'sakura' is sent to the management server for identification by the table of Fig. 5(B), the management server for identification can specify the electronic apparatus, and can reply the type, function, or format etc. regarding the electronic apparatus.

Note that in the identification information of electronic apparatus, the information of the type, function, or format etc. regarding the electronic apparatus identified by the identification information of electronic apparatus may be included. For example, the identification information of electronic apparatus such as 'dtv-DEF' including 'dtv' indicating a digital TV may be used. Similarly, in the case of mobile phone, 'phone' may be included as 'phone-ABC'.

### (Configuration of First Determination Server of First Embodiment)

The first determination server carries out a first determination of the first electronic apparatus based on identification information of first electronic apparatus in order to receive the first service from the first service server group. The 'identification information of first electronic apparatus' is for uniquely identifying the first electronic apparatus in the first service server group and in the first determination server. Note that it may be user identification information for identifying user, who receives the first service via the first electronic apparatus, not identification information of the first electronic apparatus itself. Therefore, the identification information of first electronic apparatus is identification information normally used for determination by the first determination server as to whether the first electronic apparatus is an appropriate electronic apparatus, which receives service, and is generally identification information for a system independently established in order to receive the first service. For example, it corresponds to the identification information used in an independent system (hereinafter, referred to as system X), comprising a server for a charge process and service server group for providing a plurality of services, which execute the charge process by means of the server for charge process.

As shown in Fig. 4, the first determination server (410) comprises the first storage unit for correlation (411), the output unit for first proof request (412), the receiving unit for first proof (413), and the output unit for service request with proof (414).

The 'first storage unit for correlation' (411) stores the shared identification information of the user correlated with the identification information of first electronic apparatus. For example, a table, which includes a column storing values of the shared identification information, and a column storing values of the identification information of first electronic apparatus, is stored in storing means. Subsequently, the values of the shared identification information and the values of the identification information of first electronic apparatus are stored in the same row of the table, thereby indicating that the user identified by the shared identification information uses the electronic apparatus identified by the identification information of first electronic apparatus.

Note that the identification information of electronic apparatus stored in the first storage unit for correlation (411) of the first determination server (410) may be information of a different format from that of the identification information of electronic apparatus managed in the management unit for identification of the management server for identification. Therefore, the identification information of electronic apparatus respectively specified may be identification information, which is important only in determination upon providing the first service. Even in such case, the table, in which the identification information of electronic apparatus and the shared identification information are correlated, is managed so as to acquire the shared identification information of the user of the electronic apparatus ('shared identification information' is after-mentioned), so that it is possible to carry out processing even if format of the identification information of electronic apparatus stored in the first storage unit for correlation (411) and format of the identification information of electronic apparatus managed in the management unit for identification are different.

The term 'shared identification information' is information for uniquely identifying a user in the system. Normally, it is not necessary to use the shared identification information at the stage of establishment of the above-mentioned X system, but in order to implement cross-cutting use of different service systems, it is necessary to subsequently introduce conceptual information shared in the independent system. Therefore, after establishment of the independent system (e.g., the first service system), the shared identification information as the conceptual information is introduced in order to promote the cross-cutting use (e.g., using the first and second determination servers through one electronic apparatus) between the independent system and another independent system (e.g., the second service system). Generally, it is assumed that this shared identification information is added to the determination server according to desire of the user who owns the electronic apparatus. Various distribution channels for providing the shared identification information to the determination server may exist, and it is not limited to one. Of course, this is just one example, and it is possible to preliminarily design, such that the shared identification information is used along with the identification information of apparatus, which is independent identification information system upon establishing the independent service system.

Thus, in cases where the one user receives the first and second services, the identification information of first electronic apparatus and the identification information of second electronic apparatus, which is different identification information, are used. Accordingly, it is difficult for the first and second determination servers to recognize that the user, who receives both services, is one person. However, by identifying by means of the shared identification information used in order to receive benefit of the present invention (i.e., cross-cutting use between different independent systems), it is possible to identify that the persons are the same one user (i.e., for the first determination server, the user is a user, who uses an electronic apparatus identified by the identification information of first electronic apparatus, which is an independent identification information system, and for the second determination server, the user is a user, who uses an electronic apparatus identified by the identification information of second electronic apparatus, which is another independent identification information system).

Note that, in this specification including drawings, there is no difference between 'userID:sakura' and 'sakura', and they are identical as the shared identification information.

The first determination server basically carries out a first determination as to whether the first electronic apparatus can receive the first service from the first service server group based on identification information of first electronic apparatus in order to establish the independent service system. This determination is carried out in cases where the first electronic apparatus transmits the identification information of first electronic apparatus of itself to the first determination server, thereby requesting the first service. The above processes are carried out within the system relating to the first service, and are independent processes in the first service system. The above processes are carried out in order to provide vertical service in the independent system, differently from the cross-cutting use of the different independent systems, which the present invention intends to implement.

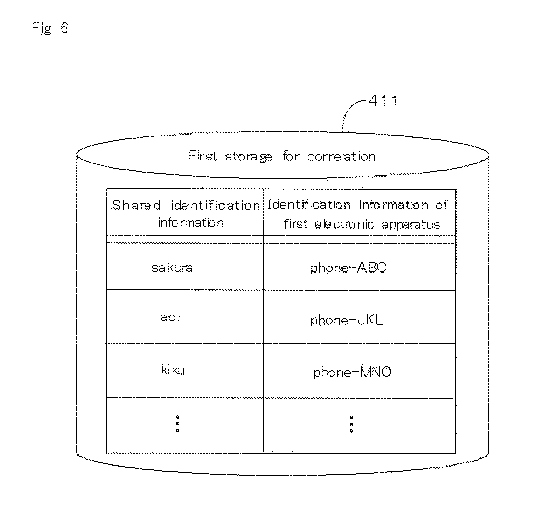

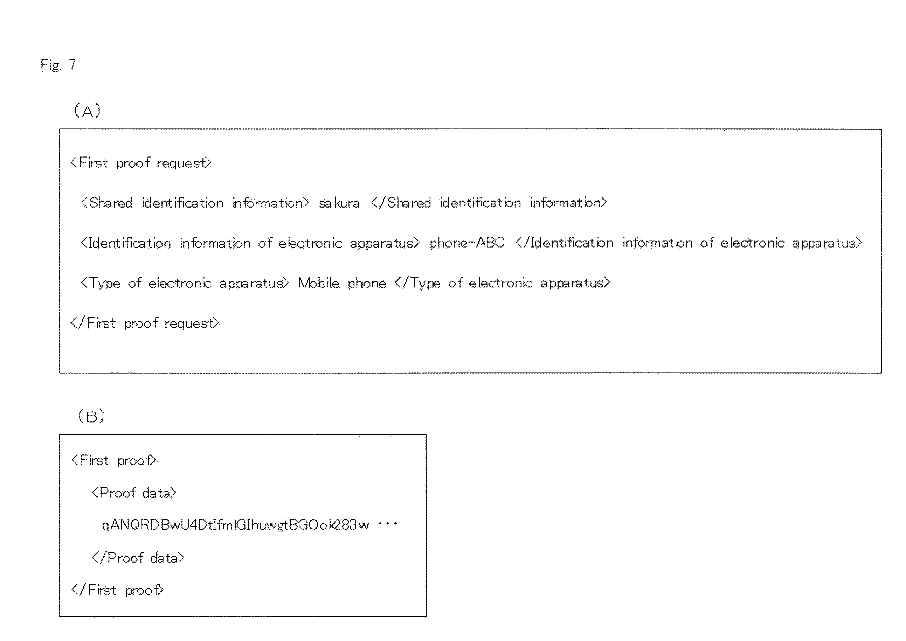

Fig. 6 shows a table stored by the first storage for correlation (411). Fig. 7 shows an example in which the first user identified as 'sakura' uses the first electronic apparatus identified as 'phone-ABC'.

The 'output unit for first proof request' (412) outputs a first proof request based on a usage request for the second determination server from the first electronic apparatus. The process of outputting the first proof request by the output unit for first proof request is an initial process carried out from the first determination server to the exterior in order to implement cross-cutting use of the different independent systems, which is an objective of the present invention. An example of the usage request of the second determination server includes the case that the first electronic apparatus transmits it in order to request payment of the fee for the first service via the second determination server. Conventionally, the first electronic apparatus can receive service only in the first service system. Meanwhile, in the present invention, it is possible to receive a predetermined service in the other service system across boundaries.

Specifically, it is an objective of the present invention to use the second determination server. Concretely speaking, a request for acquiring a decryption key via the second determination server in order to make encrypted content, downloaded by the second electronic apparatus, available to the first electronic apparatus, and a request for acquiring a password via the second determination server in order to make personal information (e.g., a schedule or a patient's chart), downloaded by the second electronic apparatus, available to the first electronic apparatus, are cited. Reiteratively speaking, conventionally, these processes have been impossible for the first electronic apparatus. The reason for this is that the first electronic apparatus can receive service only in the first service system, and these processes are possible only for the second electronic apparatus in the second service system.

Fig. 7(A) is a diagram showing an example of a first proof request. In this case, the user identified as 'sakura' requests the usage of the second determination server via an electronic apparatus, which is owned or occupied and managed by the user, and is identified as 'phone-ABC', by means of the first proof request.

In Fig. 7(A), '<type of electronic apparatus>mobile phone</type of electronic apparatus>' is described in order to request the proof indicating that the phone-ABC is a mobile phone, and this row is not essential. For example, the management server for identification may prove all items such as type, function, and format etc., of the phone-ABC used by the user identified by the shared identification information 'sakura'. Alternatively, the items of attribute information to be proved may be preliminarily determined.

Note that, it is not indicated in Fig. 7(A), the usage request can include additional information such as type of usage of the second determination server, designation of the second determination server, designation of a server in the second service server group, designation of a service provided by the second service server group, and charging method of a payment for the service. Moreover, this additional information may be correlated with the first proof request, and may be outputted to the output unit for first proof request (412).

The first proof request is outputted in order to acquire a proof indicating that a user, identified by the shared identification information by the management server for identification, solely exists. The first proof request may include information for identifying the second determination server other that the shared identification information (in Fig. 4, sakura). In cases where the usage request includes the identification information of first electronic apparatus, the identification information of first electronic apparatus is extracted, and it is searched to determine whether the shared identification information correlated with the identification information of first electronic apparatus is stored in the first storage unit for correlation of the first determination server. Further, even in cases where the usage request does not include the identification information of first electronic apparatus, the identification information of first electronic apparatus upon start of session may be used in the same session, and moreover, the identification information of first electronic apparatus may be extracted from cookie issued from the server. After the search, in cases where the shared identification information is stored, the shared identification information is acquired, included in the first proof request, and outputted to the management server for identification.

The 'receiving unit for first proof' (413) receives the first proof returned from the management server for identification in accordance with the first proof request outputted from the output unit for first proof request (412). The process in the management server for identification will be described hereinbelow. The first proof includes information proving the shared identification information included in the first proof request. In addition, information indicating type, function, or format etc. regarding the electronic apparatus identified by the identification information of electronic apparatus included in the first proof request, and information, which proves the above information, may be included. The terms 'information, which proves' corresponds, for example, to a signature by means of a secret key stored by the management server for identification (e.g., information, in which hash value of information to be proved is encrypted by a secret key stored by an entity giving the signature). In addition, the first proof received by the receiving unit for first proof may include the information indicating type, function, or format etc. regarding the electronic apparatus identified by the identification information of electronic apparatus included in the first proof request, and the information proving that the above information is managed in the management server for identification.

Fig. 7(B) shows an example of first proof. In cases where the first proof of Fig. 7(B) corresponds to the first proof request as shown in Fig. 7(A), the data between <proof data> and </proof data> proves the presence of the user identified as 'sakura' and the electronic apparatus identified as 'phone-ABC', thereby proving that the user identified as 'sakura' uses the 'phone-ABC'. This data is encrypted and signed by means of a secret key of the management server for identification, and for example, in the case of falsification, the falsification is detected. In addition, in cases where the type of electronic apparatus is managed in the management unit for identification etc. of the management server for identification, in the management, the information of type, function, or format etc. regarding the electronic apparatus may be included in this data.

The 'output unit for service request with proof (414) outputs a service request with proof including the shared identification information based on the first proof received by the receiving unit for first proof (413). The service request including the proof by the management server for identification is outputted from the first determination server, so that authenticity of the service request is proved even in the case that there is no relationship of trust between the first and second determination servers. Therefore, it is proved that the user identifiable by the shared identification information requests the service.

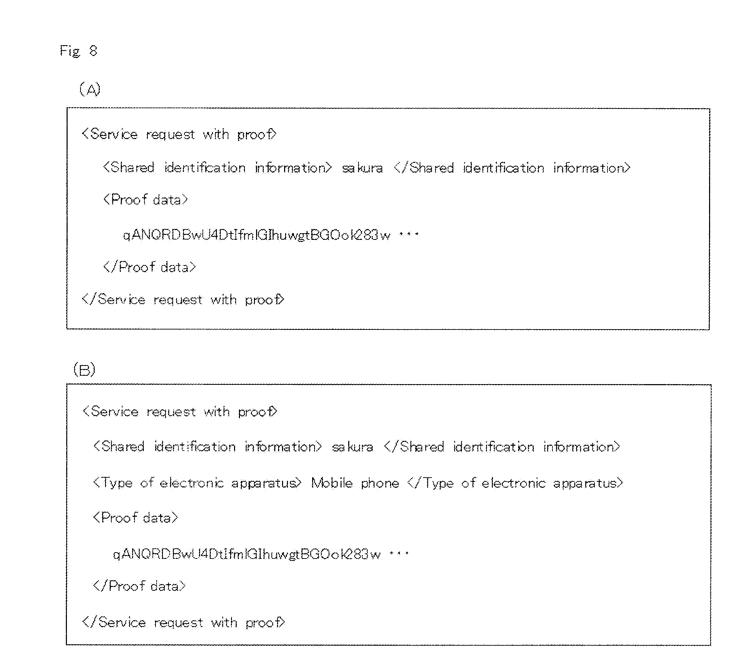

Fig. 8(A) shows an example of service request with proof, and shows that the user identified as 'sakura' wishes to use the second determination server. The portion between <proof data> and </poof data> indicates that the shared identification information 'sakura' is managed in the management server for identification, and the shared identification information exists. This portion corresponds to the first proof received by the receiving unit for first proof (413). In addition, although not indicated in Fig. 8(A), the first proof may include items such as usage type of the second determination server, designation of the second determination server, designation of a server in the second service server group, designation of a service provided by the second service server group, and charging method of a payment for the service, or may be correlated with them. In addition, in accordance with the items, the information put in the portion between '<proof data>' and '</proof data>' may be the information for proving that the item is managed by the management server for identification.

In addition, Fig. 8(B) shows the case where the information indicating type of electronic apparatus is included in the service request with proof. In the portion between <proof data> and </proof data>, type of electronic apparatus, through which the user identified as 'sakura' wishes to receive the service, is indicated. The first determination server manages the type of electronic apparatus correlated with the identification information of electronic apparatus, and based on the managed data, the information indicating the type of electronic apparatus is put in the portion between <proof data> and </proof data>. In addition, in cases where the type of electronic apparatus is managed in the management unit for identification of the management server for identification, the information indicating proof of the type of electronic apparatus may be included and put in the portion between <proof data> and </proof data> based on the managed data. For example, the information indicating the type of electronic apparatus may be encrypted by the secret key of the management server for identification, and may be included, or a signature of the management server for identification for the information indicating the type of electronic apparatus may be included.

In Fig. 8(B), the case where the type of electronic apparatus is included in the service request with proof, and similarly, the function of format of electronic apparatus may be included, and the information indicating proof of the content (e.g., content of encryption by the secret key of the management server for identification or signature) may be included in the portion between <proof data> and </proof data>.

Thus, the information indicating the type of electronic apparatus is included in the service request with proof, so that the second determination server, which has received the service request with proof, can know the type of electronic apparatus, through which the operation as a trigger of generating the service request with proof, and can make determination on providing the second service. In addition, it is possible to provide service in accordance with the type, format, or function of the electronic apparatus.

### (Processing of First Determination Server of First Embodiment)

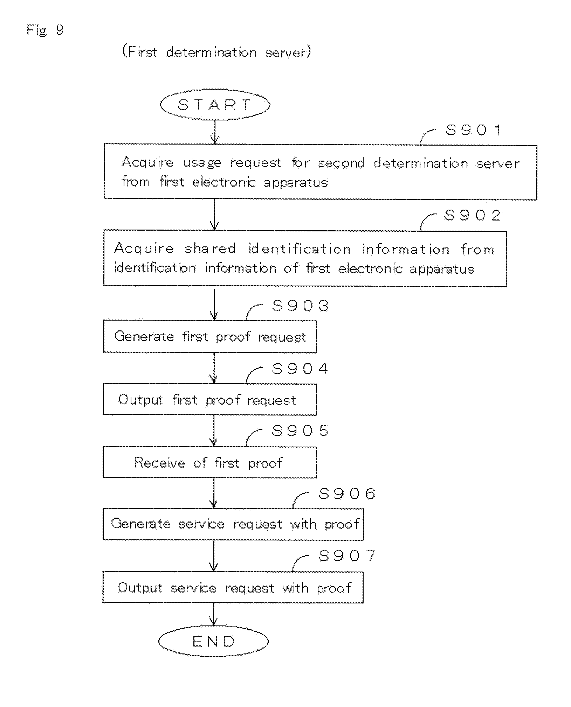

Fig. 9 is a flowchart showing processing of a first determination server of the first embodiment. The first determination server carries out processes in this flowchart every time acquisition of the usage request for the second determination server from the first electronic apparatus becomes possible. In step S901, the usage request for the second determination server is acquired from the first electronic apparatus. For example, read system call in communication by means of socket is executed in the output unit for first proof request (412). In step S902, the shared identification information is acquired from the identification information of the first electronic apparatus. For example, the identification information of the first electronic apparatus, which has transmitted the usage request in step S901, is acquired, and search of the first storage unit for correlation (411) etc. and of the table, which manages the identification information of electronic apparatus correlated with the shared identification information, is carried out by means of the acquired identification information of the first electronic apparatus, thereby acquiring the shared identification information.

In step S903, the first proof request is generated with reference to the information acquired by steps S901 and S902. For example, the first proof request as shown in Fig. 7(a) is generated, and is stored in a memory. In step S904, the first proof request is outputted. For example, communication connection with the management server is established, and by means of acquired socket, write system call is executed in the output unit for first proof request (412).

In step S905, the first proof is received. For example, read system call by means of the socket of the communication connection established in step S904 is executed in the receiving unit for first proof request (413). In step S906, based on the received first proof, the service request with proof is generated. For example, the information as shown in Fig. 8 is generated and is stored in a memory. In step S907, the service request with proof is outputted. For example, communication connection with the second determination server is established, and by means of acquired socket, write system call is executed in the output unit for service request with proof (414).

After that, if service is provided from the second determination server or from the second service server group, the first determination server transfers the service to the first electronic apparatus. In addition, in cases where the identification information of the first electronic apparatus is included in the service request with proof, the service may be directly provided from the second determination server or from the second service server group to the first electronic apparatus.

### (Configuration of Second Determination Server of First Embodiment)

The 'second determination server' carries out a second determination of the second electronic apparatus based on identification information of second electronic apparatus in order to receive the second service from the second service server group. The 'identification information of second electronic apparatus' is for uniquely identifying the second electronic apparatus in the second service server group and in the second determination server. Note that it may be user identification information for identifying user who receives the second service via the second electronic apparatus, not the identification information for identifying the second electronic apparatus itself. Therefore, the identification information of second electronic apparatus is identification information normally used for determination by the second determination server as to whether the second electronic apparatus is an appropriate electronic apparatus, which receives service, and is generally identification information for a system independently established in order to receive the second service.

As shown in Fig. 4, the second determination server (420) comprises the 'second storage unit for correlation' (421), and the 'receiving unit for service request with proof (422),

The 'second storage unit for correlation' (421) stores the shared identification information of the user correlated with the identification information of second electronic apparatus. Generally, it is assumed that this shared identification information is added to the determination server according to desire of the user who owns the electronic apparatus. Various distribution channels for providing the shared identification information to the determination server may exist, and it is not limited to one. Of course, this is just one example, and it is possible to preliminarily design, such that the shared identification information is used along with the identification information of apparatus, which is an independent identification information system upon establishing the independent service system.

The second determination server carries out a second determination as to whether the second electronic apparatus can receive the second service from the second service server group based on identification information of second electronic apparatus in order to establish the independent service system. This determination is carried out in cases where the second electronic apparatus transmits the identification information of second electronic apparatus of itself to the second determination server, thereby requesting the second service. The above processes are carried out within the system relating to the second service, and are independent processes in the second service system. The above processes are carried out in order to provide vertical service in the independent system, differently from the cross-cutting use of the different independent systems, which the present invention intends to implement.

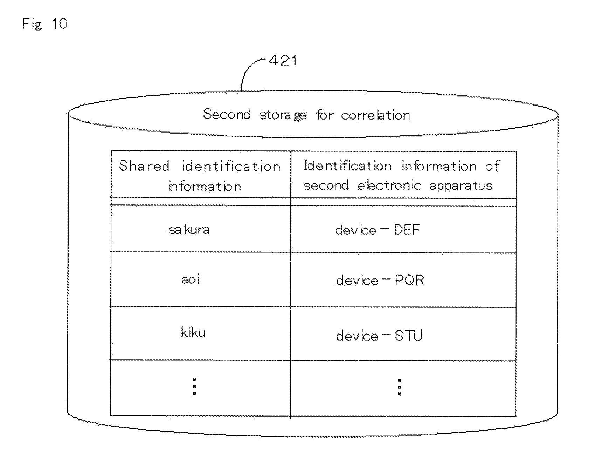

Fig. 10 is a diagram showing an example of a table stored by a second storage for correlation. Fig. 10 shows that the second user identified as 'sakura' uses the electronic apparatus identified by 'device-DEF'.

The 'receiving unit for service request with proof (422) receives a service request with proof. The service request with proof is generated based on the first proof, thereby possessing high reliability. Therefore, the second determination server may provide service according to the received service request. Further, there is a case where the first proof outputted from the management server for identification is encrypted by the private key of the management server for identification. In this case, although the service request with proof includes encrypted proof, the second determination server may carry out decryption by means of the public key of the management server for identification, and may confirm content of the proof (e.g., an authenticity such as a signature given to the shared identification information). Further, the second determination server may carry out search by means of the shared identification information as a key based on the service request. This will be described in the second configuration of the first embodiment.

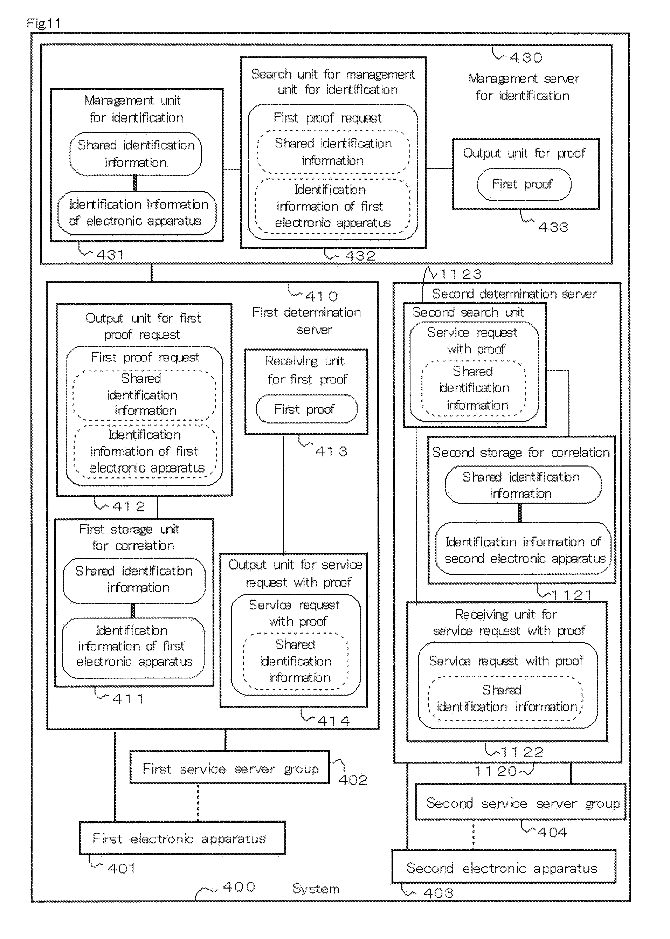

Fig. 11 is a functional block diagram of the second determination server carries out search by means of the shared identification information as a key based on the service request. Comparing Fig. 4 and 11, in Fig. 11, a second search unit (1123) is added.

The 'second search unit' (1123) searches the second storage unit for correlation (1121) by means of the shared identification information as a key based on the service request with proof received by the receiving unit for service request with proof (1122). The search carried out by means of the shared identification information as a key is a search, in which the shared identification information included in the service request with proof is extracted, and search as to whether the shared identification information corresponding thereto is stored in the second storage unit for correlation is carried out. If the corresponding shared identification information is acquired, a service in accordance with the service request with proof (e.g., payment of a fee for the first service, transmission of a decryption key of encrypted content etc., or transmission of a password) may be provided. In addition, the search result may be transmitted to the first determination server or to the second electronic apparatus (via the second service server group).

In the first embodiment, it is proved by the management server for identification that the user identified by the shared identification information solely exists, so that the second determination server can determine the authenticity of the service request. This service request can include the information indicating type, function, or format of the first electronic apparatus, which receives the service, so that the second determination server can determine whether the electronic apparatus is suitable to receive the service. The reason for this is as follows. The second determination server usually uses the identification information of second electronic apparatus for identifying an electronic apparatus, which can receive service. Therefore, the identification information of second electronic apparatus is used for the second determination. Therefore, the second determination server can put trust in a target having the identification information of second electronic apparatus, but basically cannot confirm authenticity of a target by other means. Meanwhile, in the present invention, there is a case where the identification information of second electronic apparatus correlated with the shared identification information in the second determination server is exceptionally utilized. This correlation with the shared identification information means that, for example, a target identified by the identification information of second electronic apparatus (e.g., 'device-DEF') and a target identified by the shared identification information (e.g., 'sakura') are the same.

Here, if the usage request for second determination server is sent from the target identified by the shared identification information, the second determination server regards it as the request from the target identified by the identification information of second electronic apparatus. However, if the identification information 'sakura', is redundantly given in the system, it is not limited to the above case. Therefore, there is a possibility that a user, who has the identification of 'sakura', and accesses from another server, is not a different person. In order to solve this problem, it is necessary to ensure that the identification information 'sakura' is not redundantly given in the system. Therefore, if the uniqueness of 'sakura' is proved, the second determination server can process the unknown 'sakura' as the user of 'device-DEF', and can permit to provide the service.

Although the first and second determination servers are distinguished in the above case, it does not mean that they cannot have similar functions. In addition, although the first determination server and the second determination server are distinguished for convenience in the other embodiments, they may have the same functions.

### (Processing of Second Determination Server of First Embodiment)

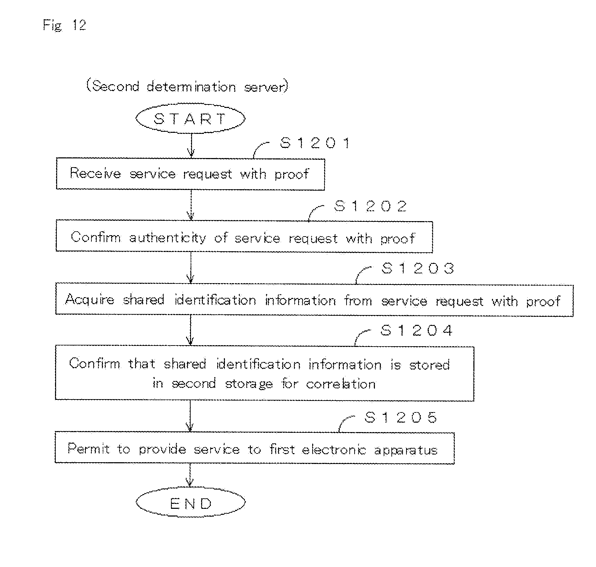

Fig. 12 is a flowchart showing processing of the second determination server of the first embodiment. The second determination server carries out processes in this flowchart every time reception of the service request with proof becomes possible. In step S1201, the service request with proof is received. After detecting the availability of reception of the service request with proof, communication connection with the first determination server is established, so that read system call by means of the acquired socket is executed in the output unit for service request with proof (422). In step S1202, authenticity of the service request with proof received by step S1201 is confirmed. For example, by means of the public key of the management server for identification, an examination of the signature etc. is carried out. In step S1203, the shared identification information is acquired from the service request with proof received by step S1201.

In step S1204, it is confirmed that the shared identification information acquired by step S1203 is stored in the storage unit for correlation. In accordance with this confirmation, it is possible to confirm that the user of the first electronic apparatus, through which the operation as the trigger of receiving the service request with proof, is the user who uses the second electronic apparatus, which receives the service based on the determination by the second determination server. Therefore, a charge process of the payment for the service etc. can be carried out in the second determination server's side. In addition, in this step, it may be confirmed whether the type, function, or format of the first electronic apparatus etc, is suitable for the service provision.

In step S1205, based on the confirmation by step S1204, the service provision for the first electronic apparatus is permitted. For example, provision of the service for the first electronic apparatus is instructed to a server of the second service server group. Note that in cases where such instruction is sent to the server of the second service server group, the shared identification information, which can be included in the service request with proof acquired by step S1203, may be include in the instruction. Therefore, the server of the second service server group can identify the user, who receives the service, and for example, it is possible to determine whether a similar or same service has been provided in the past. Based on this determination, the first user, who has received the similar or same service, may receive the service at a discounted price or no fee.

For example, a case where a server of the second service server group carries out downloading of music data is described. In cases where music A is downloaded to the second electronic apparatus used by a user, and the charging as to the download is completed, it is assumed that the same user requests downloading of the music A to the first electronic apparatus by means of the service request with proof via the first determination server. In this case, it is possible to confirm that the user has downloaded the music A to the second electronic apparatus by referring the shared identification information included in the instruction upon downloading the music A, so that it is possible to carry out downloading at discounted price or at no fee. Note that if the first electronic apparatus is a terminal apparatus such as a personal computer, which is easily to be altered, unauthorized copy can be made, so that it is necessary to confirm that the type, function, or format etc. of the first electronic apparatus is strongly resistant to the unauthorized copying. In the present invention, the information regarding the type, function, or format etc. of the first electronic apparatus can be included in the service request with proof, thereby prevent the unauthorized copying.

In addition, if the information regarding the type, function, or format etc, of the first electronic apparatus is included in the service request with proof, it is possible to provide a service in accordance with the type, function, or format etc. of the first electronic apparatus in the case of providing service from the second service server group to the first electronic apparatus. For example, even if the second service server group provides a downloading service of music data in WMA format to the second electronic apparatus, if the first electronic apparatus can reproduce only data in MP3 format, the data in WMA format is converted to the data in MP3 format, and is downloaded to the first electronic apparatus.

### (Configuration of Management Server for Identification of First Embodiment)

The 'management server for identification' stores the shared identification information, and manages the respective servers. There are relationships of trust between the management server for identification and the first determination server, and between the management server for identification and the second determination server.

As shown in Fig. 4, the management server for identification (430) comprises a management unit for identification (431), a search unit for management unit for identification (432), and an output unit for proof (433).

The management unit for identification (431) has already been described. The management unit for identification (431) manages the shared identification information for uniquely identifying the user in the system correlated with the identification information of electronic apparatus used by the user. The shared identification information is issued according to preliminary registration by a user, and is given to the first and second determination servers. Note that various distribution channels for providing the shared identification information to the determination server may exist, and it is not limited to one. By means of the shared identification information, it is proved that the identification information of the user necessary to use more than or equal to two services is unique.

The 'search unit for management unit for identification' (432) searches the management unit for identification based on the first proof request outputted by the first determination server. The shared identification information included in the first proof request is extracted, and search as to whether the shared identification information corresponding thereto is managed in the management unit for identification is carried out. In addition, if the identification information of first electronic apparatus is included in the first proof request, search as to whether the user identified by the shared identification information uses the first electronic apparatus may be carried out. In addition, if the type, function, or format etc. of the first electronic apparatus is managed in the management unit for identification (431) etc., search for the type, function, or format etc, of the first electronic apparatus may be carried out.

The 'output unit for proof (433) outputs the first proof based on a search result by the search unit for management unit for identification. In cases where the uniquely matching shared identification information is acquired in the search by the search unit for management unit for identification, it is proved that the user identified by the shared identification information solely exists. The search result indicating the uniqueness of the shared identification information is necessary. The first proof is outputted only when the matching shared identification information is acquired in the search by the search unit for management unit for identification. If the matching shared identification information is not acquired, information indicating that may be separately outputted. The output destination of the first proof is the first determination server. Further, the first proof outputted to the first determination server may be encrypted by a private key of the management server for identification. In this case, the second determination server, which receives the service request with proof, carries out decryption by the public key of the management server for identification, and if the proof is confirmed, it is possible to prevent falsification and impersonation. In addition, as described above, if the type, function, or format etc. of the first electronic apparatus is managed in the management unit for identification (431) etc., the proof information regarding the type, function, or format etc. of the first electronic apparatus may be generated as a portion of the first proof, and may be outputted. In addition, the proof information regarding the type, function, or format etc. of the first electronic apparatus may be correlated with the first proof, and may be outputted.

### (Processing of Management Server for Identification of First Embodiment)

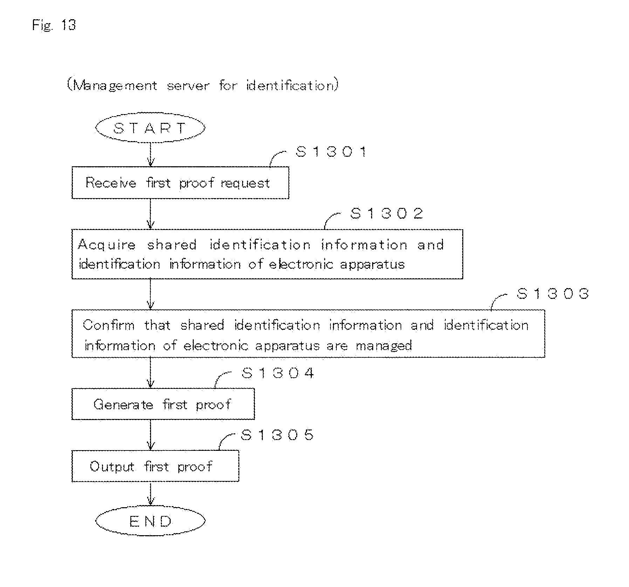

Fig. 13 is a flowchart showing processing of the management server for identification. The management server for identification carries out processes in this flowchart every time reception of the first proof request becomes possible. In step S1301, the first proof request is received. For example, by means of the socket generated in accordance with a request for establishment of the communication connection from the first determination server, read system call is executed in the search unit for management unit for identification (432) etc. In step S1302, the shared identification information included in the first proof request and the identification information of electronic apparatus are acquired. In step S1303, it is confirmed that the shared identification information and the identification information of electronic apparatus acquired by step S1302 are managed by the management unit for identification (431) by searching the management unit for identification. In step S1304, based on the confirmation of step S1303, the first proof is generated, and at least, the first proof is temporarily stored in storage means such as a memory. In step S 1305, the first proof generated and stored in step S1304 is outputted. For example, by means of acquired socket of the communication connection established in step S 130 1, write system call is executed in the output unit for first proof (433).

### (Processing of Entire System of First Embodiment)

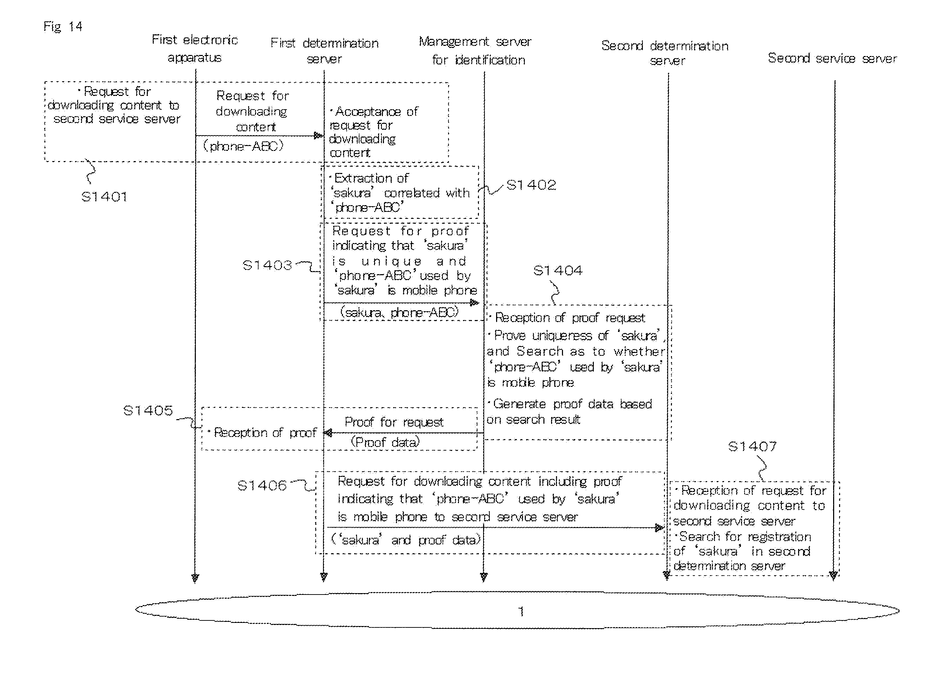

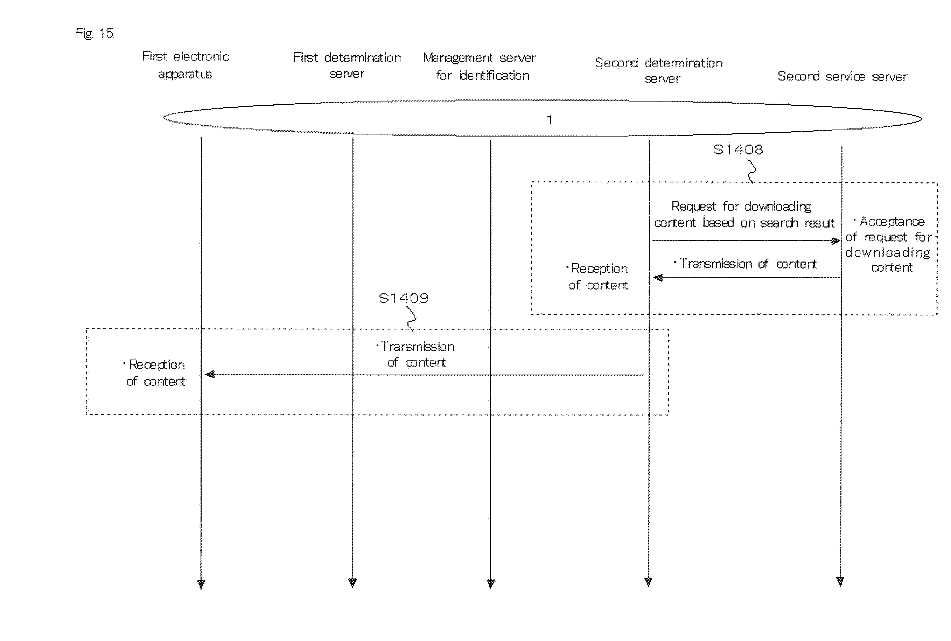

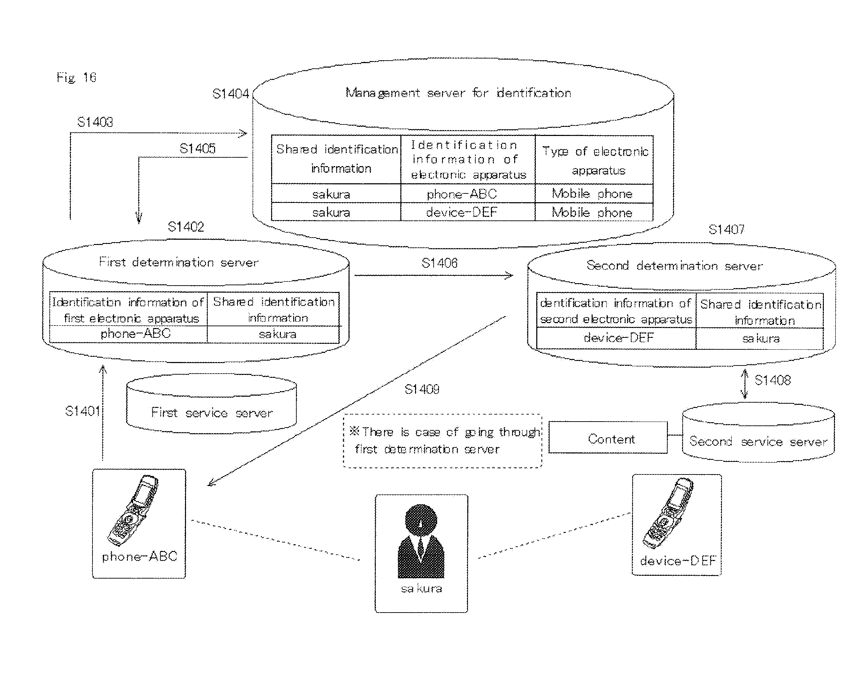

Figs. 14 and 15 are sequential diagrams showing concrete examples of data flow of the entire system of the first embodiment. Fig. 16 is a diagram showing the overall processing of the entire system as shown in Figs. 14 and 15. In this example, as the usage request, a request for content downloading (DL) to the service server via the second determination server is cited. When the user operates the first electronic apparatus in order to receive the second service, processes subsequent to step S1401 are carried out. In step S1401, a DL request for content to the second service server is outputted from the first electronic apparatus to the first determination server. In this case, in the first determination server, which has accepted the DL request (usage request), the shared identification information (sakura) correlated with the identification information of first electronic apparatus (device-ABC) is extracted (S1402). After that, the first proof request is generated in the first determination server and proof request is outputted to the management server for identification (S1403). In step S1403, proof request as to the uniqueness of 'sakura' identified by the shared identification information, and as to that the electronic apparatus identified as 'phone-ABC' is a mobile phone, is outputted with the shared identification information (sakura) and the identification information of first electronic apparatus (phone-ABC) Note that, in the second determination server, which has received the service request, the proof, indicating that the electronic apparatus identified as 'phone-ABC' is a mobile phone, is used for determination as to whether it is possible to provide the service for the electronic apparatus technologically.

The management server for identification receives the proof request, and carries out searching for the identification information of first electronic apparatus managed in the management unit for identification, thereby generating the proof data (first proof) based on the search result (S 1404).

Subsequently, the first proof corresponding to the first proof request is returned from the management server for identification to the first determination server, and the first determination server receives it (S1404). In the first determination server, the service request with proof is generated in accordance with the acquired first proof. Therefore, the DL request for content (service request with proof) to the second service server including the proof, indicating that the electronic apparatus, which is used by sakura and has been identified as 'phone-ABC', is a mobile phone, is outputted. Note that this DL request for content includes the shared identification information (sakura) of the user (S1406).

Subsequently, the second determination server receives the DL request for content, and confirms the authenticity of the service request with proof by searching the second storage unit for correlation, for example (S1407). Specifically, search as to whether the shared identification information (sakura) of the user is registered (is correlated with the identification information of second electronic apparatus and stored) in the second determination server.

Subsequently, in Fig. 15, the second determination server outputs DL request for content to the second service server, a portion of the second service server group, based on the search result. The second service server outputs the content to the second determination server due to the request from the second determination server, which is reliable for the second service server. Note that in step S1408, format of the content may be changed and transmitted in accordance with the type of electronic apparatus, which receives the service. Subsequently, the second determination server transmits the received content to the first electronic apparatus (S1409). In addition, step S1409 may be carried out via the first determination server.

### <Configuration for Implementing First Embodiment>

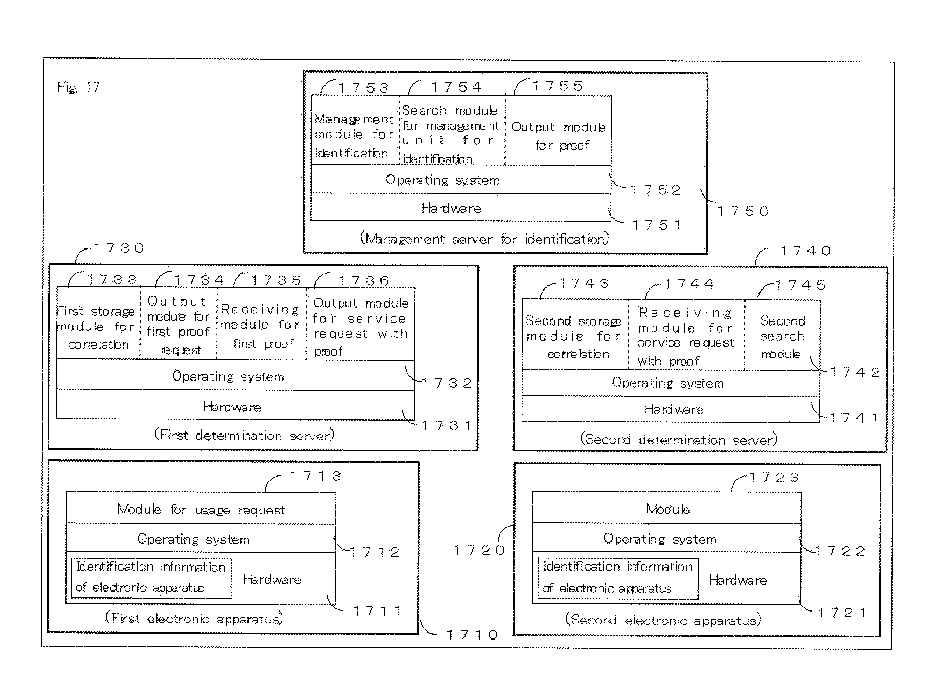

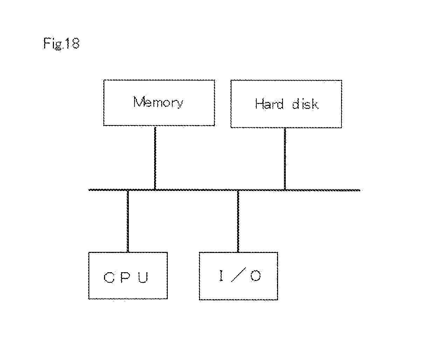

Fig. 17 is a diagram showing an example of configuration for implementing the first embodiment. In Fig. 17, the first determination server (1730) is explained. As shown in Fig. 18, a physical configuration of the first determination server (1730) is implemented by the hardware (1731) configured by a CPU, a memory, a hard disk, an input/output device, a network interface (I/O) etc. Logically speaking, an operating system (1732), basic software for abstraction of functions of the hardware (1731), or for managing operation of the hardware (1731) is operated, and program configured by including modules such as a first storage module for correlation (1733), an output module for first proof request (1734), a receiving module for first proof (1735), and an output module for service request with proof (1736), which are for implementing the first storage unit for correlation (511), the output unit for first proof request (512), the receiving unit for first proof (513), and the output unit for service request with proof' (514), is operated on the software. This program executes the processing of Fig. 9, for example.

Note that, as to the second determination server (1740) and the management server for identification (1750), an operating system runs on the hardware, and program including modules for implementing the components is operated thereon, so that it is possible to implement.

Note that, as to the first electronic apparatus (1710) and the second electronic apparatus (1720), similar to the respective servers, an operating system runs on the hardware, and program including modules for implementing the components is operated thereon, so that it is possible to implement. Further, in the electronic apparatus, the identification information of electronic apparatus correlated with the hardware (1711 and 1721) is stored.

### <Brief Description of Effects of First Embodiment>

In the above disclosed system configuration, one electronic apparatus is not bound by one service system, thereby removing boundaries between service systems. For example, the first electronic apparatus can receive a service provided by the second service server group. Moreover, it is possible to provide a service only to an electronic apparatus belonging to scope of function or format desired by the service provider managing the second service server group.

### «Second embodiment»

### <Concept of Second Embodiment>

Hereinafter, a second embodiment will be described. Similar to the first embodiment, the second embodiment is a system comprising service server groups, electronic apparatuses, determination servers, and management server for identification. The second embodiment is different in that based on a usage request for the second determination server from the first electronic apparatus, the management server for identification, which has received a service request with proof request outputted from the first determination server, carries out a search of a management unit for identification, and outputs the service request with proof based on a search result.

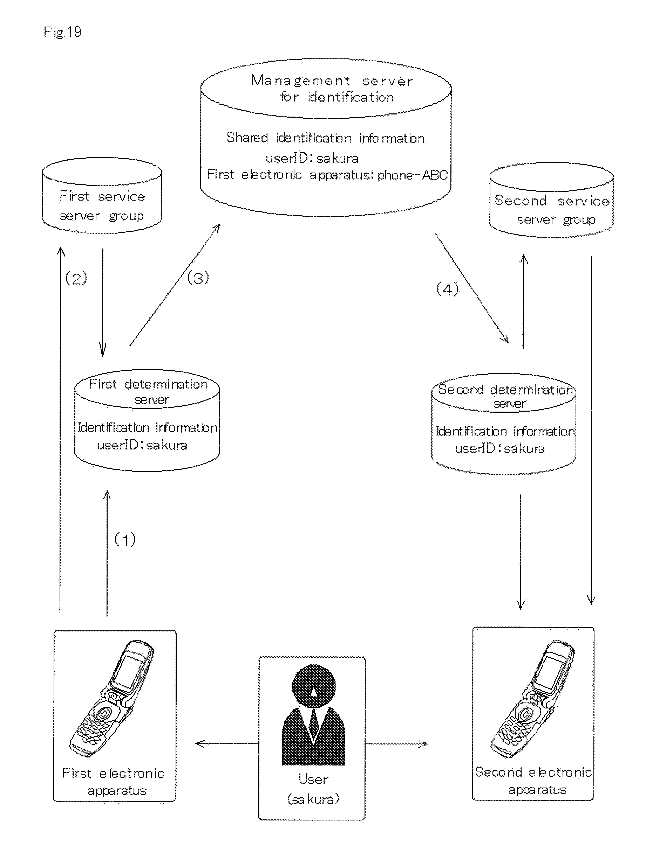

Fig. 19 is a conceptual diagram showing the second embodiment. Fig. 19 shows a relation between the respective servers and apparatuses configuring the system of the second embodiment. The first electronic apparatus and the second electronic apparatus are used by the same one user. The respective electronic apparatuses can receive various services such as internet browsing or reproducing content from a service server. In order to receive the service, a user preliminarily registers the shared identification information to the management server for identification. Further, the user is required to register the shared identification information to the respective determination servers. Note that, until this registration has been completed, the cross-cutting use between different independent systems, an objective of the present invention, is impossible.

At the outset, the first determination server receives the usage request for the second service server under control of the second determination server from the first electronic apparatus (1). Hereat, the usage request may be received via the first service server group (2). Subsequently, the first determination server outputs the service request with proof request, including the identification information of second determination server, the shared identification information, and the identification information of first electronic apparatus, based on the usage request (3). This addition of the proof request to the service request is for proving the uniqueness of the shared identification information (userID:sakura) in the system, from the management server for identification, and for proving that the user identified as userID:sakura uses the first electronic apparatus. Subsequently, the management server for identification searches the management unit for identification based on the service request with proof request outputted by the first determination server, and outputs the service request with proof request based on the search result (4).

Subsequently, the second determination server receives a service request with proof outputted from the management server for identification. Here, the second determination server may provide the service according to the received service request after confirming the proof added to the received service request. Further, based on the service request with proof, there is the case where it is searched as to whether the shared identification information of the user and the identification information of second electronic apparatus are correlated and stored by means of the shared identification information as a key.

### <Configuration of Second Embodiment>

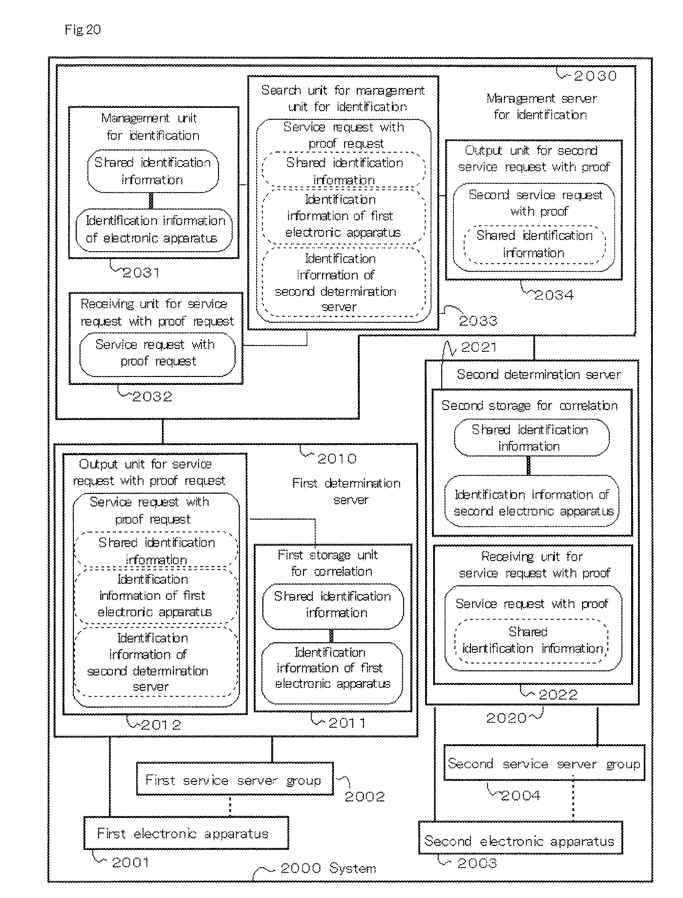

Fig. 20 is a functional block diagram of a system (2000) of the second embodiment. Therefore, a system (2000) of the second embodiment comprises a first service server group (2002), which provides a first service to a first electronic apparatus (2001) based on a first determination, a second service server group (2004), which provides a second service to a second electronic apparatus (2003) based on a second determination, the first electronic apparatus (2001), which is used by a user, and receives the first service from the first service server group (2002), the second electronic apparatus (2003), which is used by user, and receives the second service from the second service server group (2004), a first determination server (2010), which carries out a first determination of the first electronic apparatus (2001) based on identification information of first electronic apparatus in order to receive the first service from the first service server group (2002), a second determination server (2020), which carries out a second determination of the second electronic apparatus (2003) based on identification information of second electronic apparatus in order to receive said second service from the second service server group (2004), and a management server for identification (2030), in which a management unit for identification (2031) manages the shared identification information for uniquely identifying the user in the system correlated with the identification information of electronic apparatus used by the user.

In the first embodiment, communication between the first determination server (410) and the management server for identification (430) is carried out, and after that, communication between the first determination server (410) and the second determination server (420) is carried out. Meanwhile, in the second embodiment, communication between the first determination server (2010) and the management server for identification (2030) is carried out, and after that, communication between the management server for identification (2030) and the second determination server (2020) is carried out.

### (Configuration of First Determination Server of Second Embodiment)

As shown in Fig. 20, the first determination server (2010) comprises a first storage unit for correlation (2011) and an output unit for first proof request (2012).

The 'first storage unit for correlation' (2011) stores the shared identification information of the user correlated with the identification information of first electronic apparatus. Therefore, the definition of the first storage unit for correlation (2011) is the same as that of the first storage unit for correlation (411).

The 'output unit for service request with proof request' (2012) outputs a service request with proof request, including the identification information of the second determination server and the identification information of the first electronic apparatus, based on a usage request for the second determination server from the first electronic apparatus. The 'identification information of the second determination server' is information for identifying the second determination server. For example, FQDN (Fully Qualified Domain Name) assigned to the second determination server or IP address assigned to the second determination server is cited.

The 'output unit for service request with proof request' (2012) carries out an initial process carried out from the first determination server to the exterior in order to implement cross-cutting use of the different independent systems, which is an objective of the present invention. An example of the usage request of the second determination server includes the case that the first electronic apparatus transmits it in order to request payment of the fee for the first service via the second determination server. Conventionally, the first electronic apparatus can receive service only in the first service system. Meanwhile, in the present invention, it is possible to receive a predetermined service in the other service system across boundaries. Specifically, it is an objective of the present invention to use the second determination server. Concretely speaking, a request for acquiring a decryption key via the second determination server in order to make encrypted content, downloaded by the second electronic apparatus, available to the first electronic apparatus, and a request for acquiring a password via the second determination server in order to make personal information (e.g., a schedule or a patient's chart), downloaded by the second electronic apparatus, available to the first electronic apparatus, are cited. Conventionally, these processes have been impossible for the first electronic apparatus. The reason for this is that the first electronic apparatus can receive service only in the first service system, and these processes are possible only for the second electronic apparatus in the second service system.

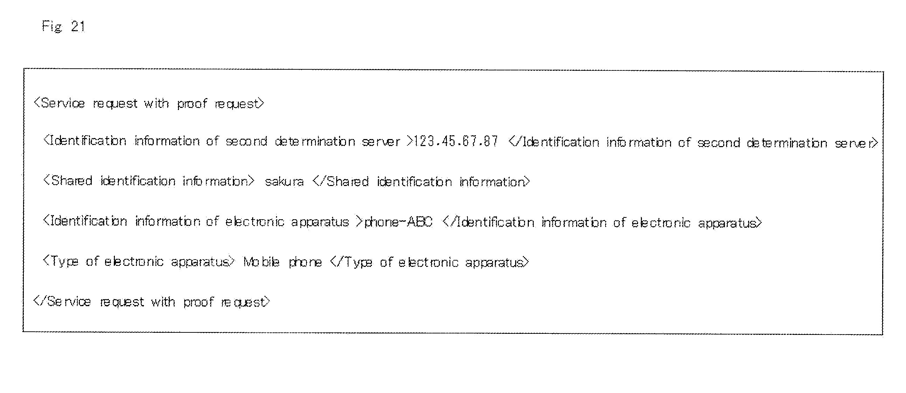

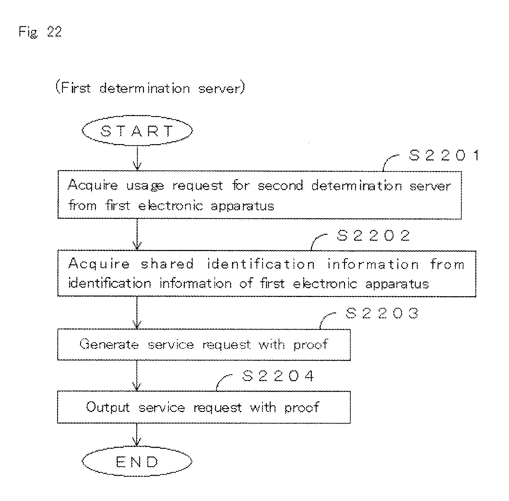

Fig. 22 is a diagram showing an example of a service request with proof request. In this example, the second determination server is identified by IP address 123,45,67,87, the shared identification information is expressed as sakura, and the identification information of the first electronic apparatus is expressed as phone-ABC. Not indicated in Fig. 21, the service request with proof request may include other information such as designation of a server in the second service server group, designation of a service provided by the second service server group, and charging method of a payment for the service. Note that, similar to the first embodiment, the row '<type of electronic apparatus>mobile phone</type of electronic apparatus>' is not essential.

### (Processing of First Determination Server of Second Embodiment)

Fig. 22 is a flowchart showing processing of the first determination server of the second embodiment. The first determination server carries out processes in this flowchart every time the acquisition of the usage request for the second determination server from the first electronic apparatus becomes possible. In step S2501, the usage request for the second determination server is acquired from the first electronic apparatus. For example, read system call in communication by means of socket is executed in the output unit for service request with proof request (2012). In step S2202, the shared identification information is acquired from the identification information of the first electronic apparatus. For example, the identification information of the first electronic apparatus, which has transmitted the usage request in step S2201, is acquired from the information indicating the communication connection, and search of the first storage unit for correlation (2011) etc. is carried out by means of the acquired identification information of the first electronic apparatus, thereby acquiring the shared identification information.

In step S2203, the service request with proof request is generated with reference to the information acquired by steps S2201 and S2202. For example, the service request with proof request as shown in Fig. 21 is generated, and is stored in a memory. In step S2204, the service request with proof request is outputted. For example, communication connection with the management server for identification is established, the service request with proof request stored in the memory is read out, and by means of acquired socket, write system call is executed in the output unit for service request with proof request (2012).

### (Configuration of Second Determination Server of Second Embodiment)

As shown in Fig. 20, the second determination server (2020) comprises the second storage unit for correlation (2021), and the receiving unit for service request with proof (2022).

The 'second storage unit for correlation' (2021) stores the shared identification information of the user correlated with the identification information of second electronic apparatus.

The 'receiving unit for second service request with proof (2322) receives a second service request with proof outputted by the management server for identification in the system of the second embodiment. The second service request with proof is returned from the management server for identification in the system of the second embodiment based on the service request with proof request outputted by the first determination server. The process in the management server for identification in the system of the second embodiment will be described hereinafter.

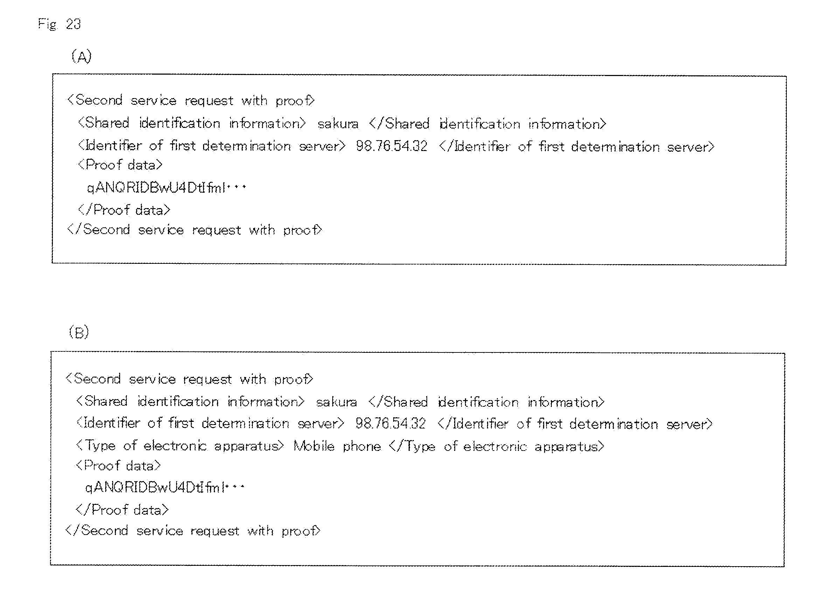

Fig. 23 is a diagram showing an example of a second service request with proof. The second service request with proof as shown in Fig. 23 includes 'sakura' as the shared identification information. Therefore, this shows that the service request sent from the user identified as sakura. It is indicated that this service request is executed from the first determination server indicated by IP address 98,76,54,32. In addition, between '<proof data>' and '</proof data>', data such as a signature etc. by the management server for identification is arranged in order to prove the authenticity of the shared identification information etc

In addition, Fig. 23(B) shows a case where the information indicating the type of electronic apparatus is included in the second service request with proof. Therefore, in the portion between <type of electronic apparatus> and </type of electronic apparatus>, character string 'mobile phone' is arranged. In this example, it is indicated that the first electronic apparatus, through which the operation as a trigger of generating the second service request with proof, is a mobile phone. Similar to the first embodiment, the type of electronic apparatus may be managed in the table as shown in Fig. 4(B) in the management unit for identification of the management server for identification. In this case, in the portion between '<proof data>' and '</proof data>', the information of signature etc. regarding type or function etc. of the electronic apparatus, which has been arranged in the portion between <type of electronic apparatus> and </type of electronic apparatus>, may be included. In addition, format or function etc. of the electronic apparatus other than the type of electronic apparatus, and the proof information thereof may be included.

In addition, not indicated in Fig. 23, the second service request with proof may include other information such as designation of a service provided by the second service server group, and charging method of a payment for the service, and the information proving the authenticity of these information may be arranged between '<proof data>' and '</proof data>'.

In addition, similar to the first embodiment, the second determination server may carry out search by means of the shared identification information as a key based on the second service request with proof.

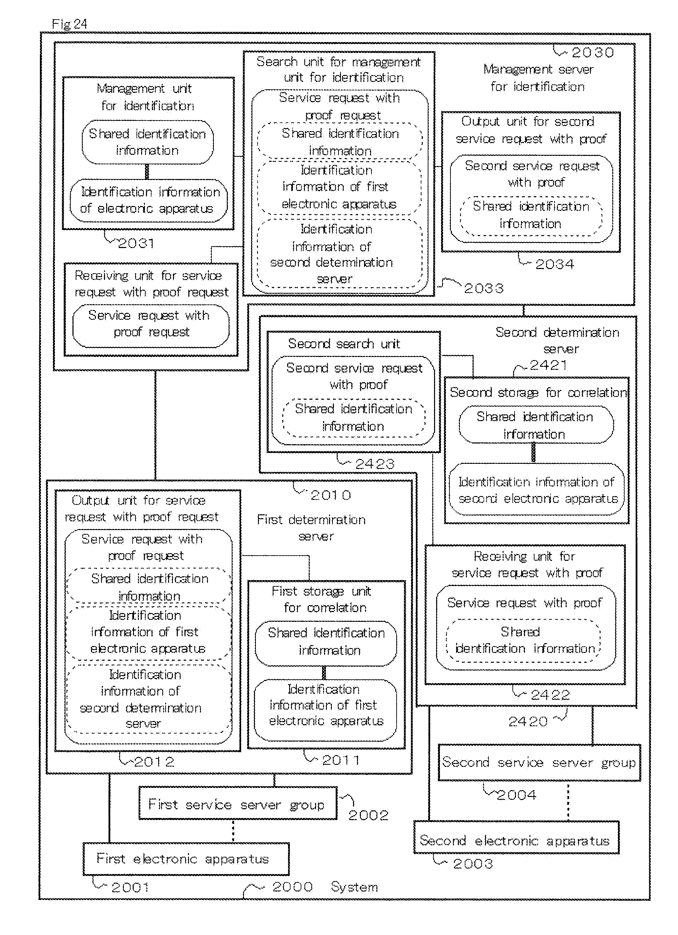

Fig. 24 is a second functional block diagram of the second determination server in cases where the search is carried out by means of the shared identification information as a key based on the second service request with proof. Comparing Fig. 24 with Fig. 23, the second search unit (2423) is added in Fig. 24.

The 'second search unit' (2423) searches the second storage unit for correlation (2421) by means of the shared identification information as a key based on the second service request with proof received from the management server for identification. The search carried out by means of the shared identification information as a key is a search, in which the shared identification information included in the service request with proof is extracted, and search as to whether the shared identification information corresponding thereto is stored in the second storage unit for correlation is carried out. If the corresponding shared identification information is acquired, a service in accordance with the service request with proof (e.g., payment of a fee for the first service, transmission of a decryption key of encrypted content etc., or transmission of a password) may be provided. In addition, the search result may be transmitted to the first determination server or to the second electronic apparatus (via the second service server group).

### (Processing of Second Determination Server of Second Embodiment)

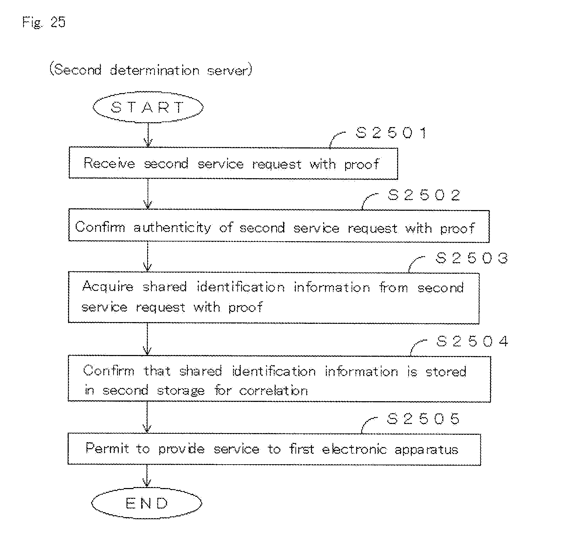

Fig. 25 is a flowchart showing processing of the second determination server in the system of the second embodiment. The second determination server carries out processes in this flowchart every time reception of the second service request with proof becomes possible. In step S2501, the second service request with proof is received. After detecting the availability of reception of the second service request with proof, communication connection with the first determination server is established, so that read system call by means of the acquired socket is executed in the output unit for second service request with proof (2022). In step S2502, authenticity of the second service request with proof received by step S2801 is confirmed. For example, by means of the public key of the management server for identification, an examination of the signature etc. is carried out. In step S2503, the shared identification information is acquired from the second service request with proof received by step S2501.

In step S2504, it is confirmed that the shared identification information acquired by step S2503 is stored in the storage unit for correlation. In accordance with this confirmation, it is possible to confirm that the second user included in the second service request with proof is the user who uses the second electronic apparatus, which receives the service based on the determination by the second determination server. Therefore, a charge process of the payment for the service etc. can be carried out on the second determination server's side. In addition,

### <Configuration of Management Server for Identification of Second Embodiment>

As shown in Fig. 20, the management server for identification (2030) comprises a management unit for identification (2031), a receiving unit for service request with proof request (2032), a search unit for management unit for identification (2033), and an output unit for second service request with proof (2034).

The 'management unit for identification' (2031) manages shared identification information for uniquely identifying the user in the system correlated with the identification information of electronic apparatus used by the user. The shared identification information is issued according to preliminary registration by a user, and is given to the first and second determination servers. Note that various distribution channels for providing the shared identification information to the determination server may exist, and it is not limited to one. By means of the shared identification information, it is proved that the identification information of the user, which is necessary to use more than or equal to two services, is unique.

The 'receiving unit for service request with proof request' (2032) receives the service request with proof request outputted by the first determination server. Note that the service request with proof request may be separately received as proof request and a service request. In this case, for example, the proof request is firstly outputted from the first determination server, and based on this, the management server for identification may search the management unit for identification. The proof as the search result is returned to the first determination server, and the first determination server, which has received this proof, may output the service request.

The 'search unit for management unit for identification' (2033) searches the management unit for identification by means of the shared identification information and the identification information of electronic apparatus as a key based on the service request with proof request received by the receiving unit for service request with proof request.

The shared identification information and the identification information of electronic apparatus included in the service request with proof request are extracted, and search as to whether a pair of the shared identification information and the identification information of electronic apparatus corresponding thereto is managed in the management unit for identification is carried out. In addition, if the corresponding shared identification information and the identification information of electronic apparatus are acquired, search by means of the identification information of second determination server included in the service request with proof request may be carried out. In this case, it is assumed that the identification information of the second determination server is correlated with the identification information of electronic apparatus, and is managed in the management unit for identification (2031) In addition, if the type, function, or format etc. of the first electronic apparatus is also managed, search for the type, function, or format etc, of the electronic apparatus by means of the identification information of electronic apparatus may be carried out.

The 'output unit for second service request with proof' (2034) outputs the second service request with proof based on the search result by the search unit for management unit for identification. Therefore, the second service request with proof is outputted based on the search result in the management unit for identification by means of the shared identification information and the identification information of electronic apparatus as a key. For this, a signature is given to the information indicating whether the shared identification information and the identification information of electronic apparatus are managed in the management unit for identification. In addition, a signature may be given to the search result for the type, function, or format etc. of the electronic apparatus. In addition, processing, in which the content of the service request included in the service request with proof request received by the receiving unit for service request with proof request (2032) is copied and is included in the second service request with proof request, is carried out. Moreover, as to the second service request with proof request, the proof and the service request may be separately outputted.

### (Processing of Management Server for Identification of Second Embodiment)

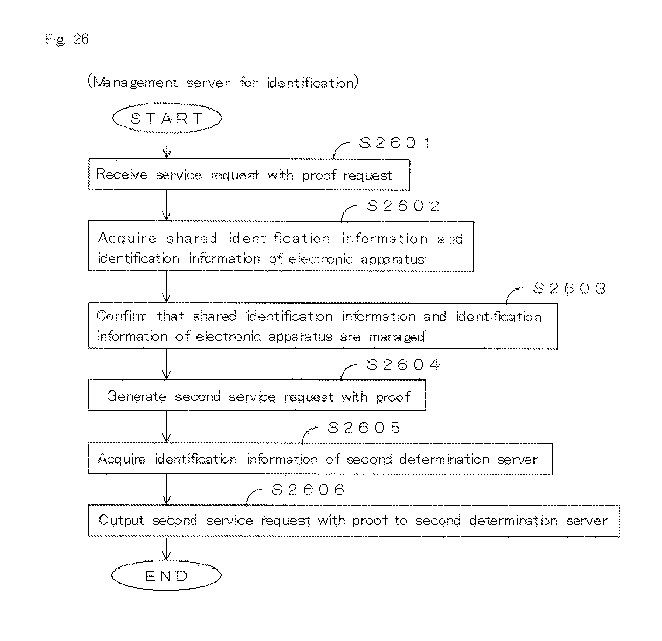

Fig. 26 is a flowchart showing processing of the management server for identification in the system of the second embodiment. The management server for identification carries out processes in this flowchart every time reception of the service request with proof request becomes possible. In step S2601, the service request with proof request is received. In this step, for example, by means of the socket generated in accordance with a request for establishment of the communication connection from the first determination server, read system call is executed in the receiving unit for the service request with proof request (2032) etc. In step S2602, the shared identification information and the identification information of electronic apparatus included in the received service request with proof request are acquired. The acquired result is temporarily stored in a memory, for example. In addition, in this step, the service request included in the service request with proof request is also acquired, and may be temporarily stored in a memory.

In step S2603, it is confirmed that the shared identification information and the identification information of electronic apparatus are managed by the management unit for identification (2031). This step is executed, for example, by searching the data stored and managed in the management unit for identification (2031) by the search unit for management unit for identification (2033). In step S2604, based on the confirmation of step S2603, the second service request with proof is generated. The generated second service request with proof is temporarily stored in a memory etc. In step S2605, the identification information of the second determination server included in the service request with proof request received in step S2601 is acquired. The acquired identification information of the second determination server is temporarily stored in a memory etc. In step S2606, the second service request with proof generated in step S2604 is outputted to the second determination server. For this step, for example, the communication connection with the second determination server is established by means of the identification information of the second determination server acquired by step S2605, and by means of the socket acquired in this establishment, write system call is executed in the output unit for second service request with proof (2034).

### (Data flow of Entire System of Second Embodiment)

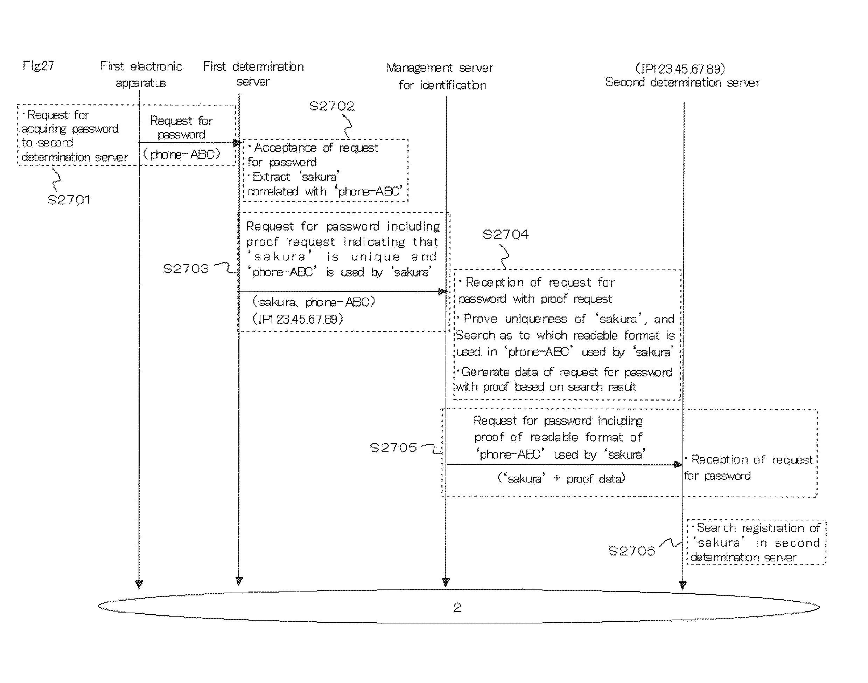

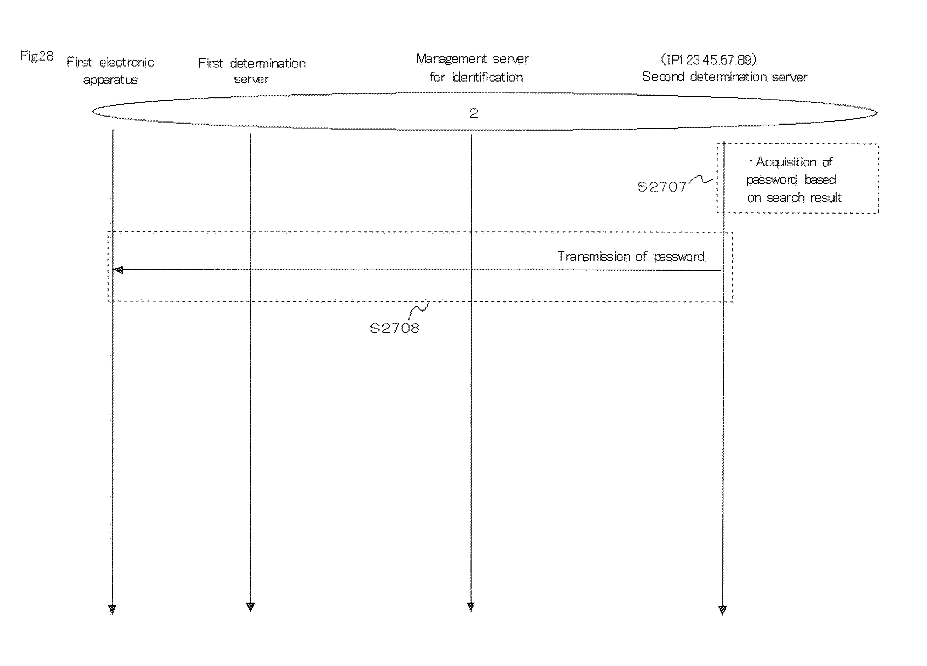

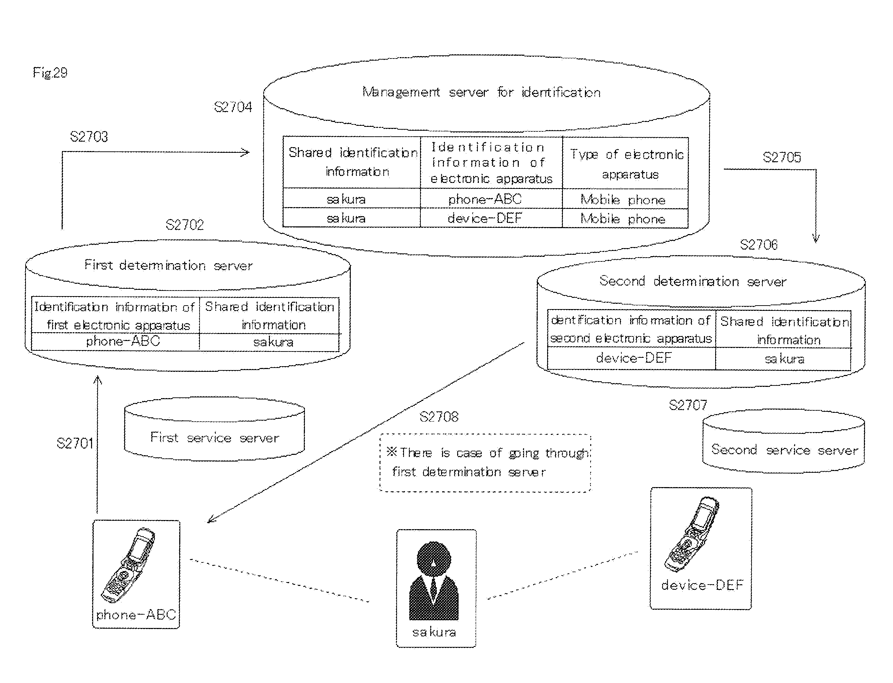

Figs. 27 and 28 are sequential diagrams showing concrete examples of data flow of the entire system of the second embodiment. Fig. 29 is a diagram showing the overall processing of the entire system as shown in Figs. 27 and 28. In this example, as the usage request, a request for acquiring a password from the second determination server in order to make personal information downloaded via the second electronic apparatus by the user available in the first electronic apparatus is cited. In step S2701, a request for acquiring password (usage request) from the second determination server is outputted from the first electronic apparatus to the first determination server, and is received and acquired in the first determination server. Subsequently, in the first determination server, which has accepted the request for password (usage request), the shared identification information (sakura) correlated with the identification information of first electronic apparatus (phone-ABC) is extracted (S2702). After that, the service request with proof request is generated in the first determination server and the request for acquiring password with proof request (service request with proof request) is outputted to the management server for identification (S2703). In step S2703, proof request as to the uniqueness of 'sakura' identified by the shared identification information, and as to that the electronic apparatus identified as 'phone-ABC' is used by 'sakura', is outputted with the shared identification information (sakura), the identification information of first electronic apparatus (phone-ABC), and he identification information of second determination server (IP123,45,679). Note that, in the second determination server, which has received the service request, the proof, indicating that the electronic apparatus identified as 'phone-ABC' is a mobile phone, is used for determination as to whether it is possible to provide the service for the electronic apparatus technologically

The management server for identification receives the proof request, and carries out searching for the identification information of first electronic apparatus managed in the management unit for identification, thereby generating the service request with proof request based on the search result (S2704). Note that in step S2704, proof including the information regarding readable format for the apparatus 'phone-ABC' used by 'sakura' is generated. Therefore, it is possible to reply a password suitable for the readable format.

Subsequently, the second service request with proof request (request for password) including the shared identification information (sakura) is outputted by transmitting from the management server for identification to the second determination server, and the second determination server receives it (S2705). Subsequently, the second determination server carries out search of the second storage unit for correlation, for example (S2706). Specifically, search as to whether 'sakura' is registered (is correlated with the identification information of second electronic apparatus and stored) in the second determination server is carried out.

Subsequently, in Fig. 28, the password is acquired in the second determination server based on the search result (S2707). In step S2707, the acquired password may be converted to available format in the first electronic apparatus, for example. Subsequently, the second determination server transmits the password to the first electronic apparatus (S2708). In addition, step S2708 may be carried out via the first determination server.

### <Configuration for Implementing Second Embodiment>

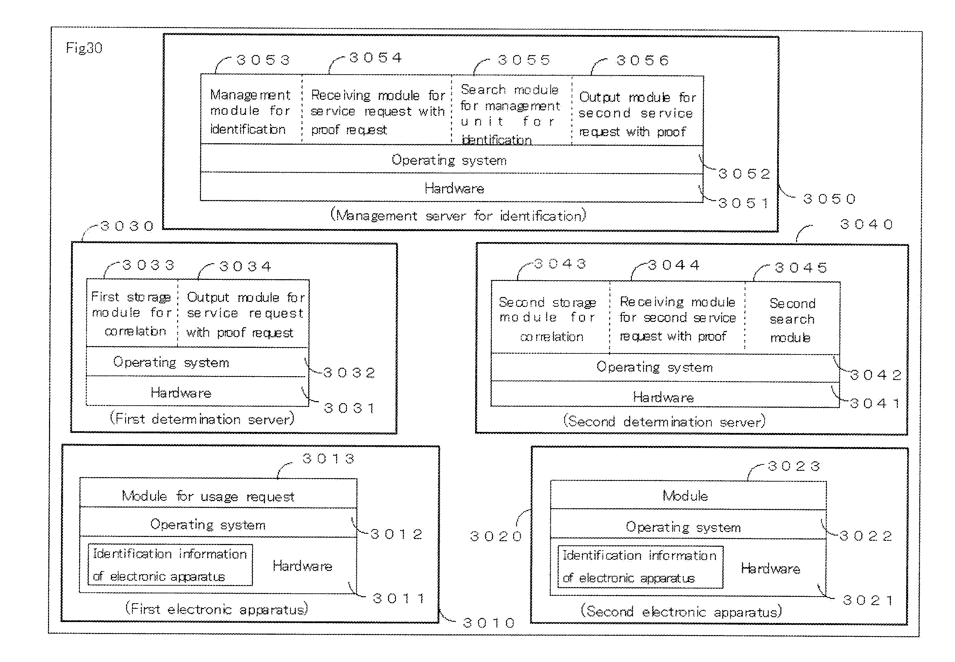

Fig. 30 is a diagram showing an example of configuration for implementing the second embodiment. In Fig. 30, the management server for identification (3050) is explained. As shown in Fig. 30, a physical configuration of the management server for identification (3050) is implemented by the hardware (3050) configured by a CPU, a memory, a hard disk, an input/output device, a network interface (I/O) etc. Logically speaking, an operating system (3052), basic software for abstraction of functions of the hardware (3051), or for managing operation of the hardware (3051) is operated, and program configured by including modules such as a management module for identification (3053), a receiving module for service request with proof request (3054), a search module for management unit for identification (3055), and an output module for second service request with proof (3056), which are for implementing the management unit for identification (2031), the receiving unit for service request with proof request (2032), the search unit for management unit for identification (2033), and the output unit for second service request with proof (2034), respectively, is operated in the software. This program executes the processing of Fig. 26, for example.

Note that, as to the first determination server (3030) and the second determination server (3040), an operating system runs on the hardware, and program including modules for implementing the components is operated thereon, so that it is possible to implement. Note that, as to the first electronic apparatus (3010) and the second electronic apparatus (3020), similar to the respective servers, an operating system runs on the hardware, and program including modules for implementing the components is operated thereon, so that it is possible to implement. Further, in the electronic apparatus, the identification information of electronic apparatus correlated with the hardware (3011 and 3021) is stored.

### <Brief Description of Effects of Second Embodiment>

This embodiment is, similar to the first embodiment, configured by the service server group, the electronic apparatus, the determination server, and the management server for identification. However, the embodiment is different from the first embodiment in that based on a usage request for the second determination server from the first electronic apparatus, the management server for identification, which has received a service request with proof request outputted from the first determination server, carries out a search of a management unit for identification, and outputs the service request with proof to the second determination server. In the above configuration, the management of user identification is carried out by incorporating a vertical-integrated system including the first electronic apparatus, the first service server, and the first determination server, with another vertical-integrated system, thereby flexibly providing service. In this case, the service request with proof is given from the management server for identification, so that it is possible to establish reliability, which is enough to provide service, even if there is no relation between the determination servers. Moreover, it is possible to provide a service only to an electronic apparatus belonging to scope of function or format desired by the service provider managing the second service server group.

### <<Third embodiment>>

### <Concept of Third Embodiment>

Hereinafter, a second embodiment will be described. Similar to the first embodiment, the second embodiment is a system comprising service server groups, electronic apparatuses, determination servers, and management server for identification. The second embodiment is different in that based on a usage request for the second determination server from the first electronic apparatus, the management server for identification, which has received a second service request with proof request outputted from the first determination server, carries out a search of a management unit for identification, and outputs the proof based on a search result.

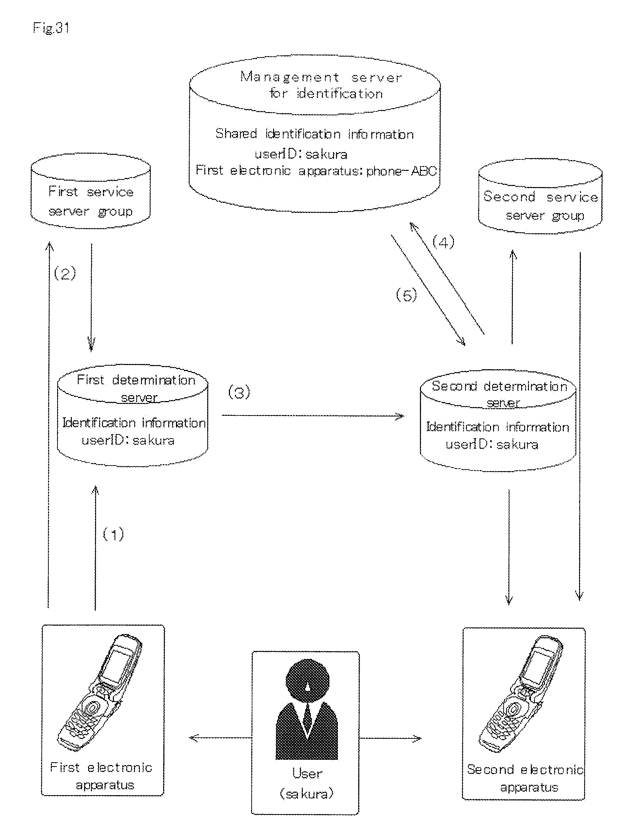

Fig. 31 is a conceptual diagram showing the third embodiment. Fig. 19 shows a relation between the respective servers and apparatuses configuring the system of the third embodiment. The first electronic apparatus and the second electronic apparatus are used by the same one user. The respective electronic apparatuses can receive various services such as internet browsing or reproducing content from a service server. In order to receive the service, a user preliminarily registers the shared identification information to the management server for identification. Further, the user is required to register the shared identification information to the respective determination servers. Note that, until this registration has been completed, the cross-cutting use between different independent systems, an objective of the present invention, is impossible.

At the outset, the first determination server receives the usage request for the second determination server from the first electronic apparatus (1). Hereat, the usage request may be received via the first service server group (2). Subsequently, the first determination server outputs the first service request, including the identification information of second determination server, the shared identification information, and the identification information of first electronic apparatus, based on the usage request (3). The first service request is outputted from the first determination server to the second determination server in order to request for providing the service based on the usage request. Subsequently, the second determination server receives the first service request outputted by the first determination server, and outputs the second proof request including the shared identification information based on the first service request (4).

Subsequently, the management server for identification receives the second proof request outputted by the first determination server, searches the management unit for identification based on the second proof request, and outputs the second proof based on the search result (5).

Subsequently, the second determination server may provide the service based on the second proof outputted from the management server for identification, and on the first service request outputted from the first determination server. Further, there is the case where it is searched as to whether the shared identification information of the user and the identification information of second electronic apparatus are correlated and stored by means of the shared identification information as a key based on the first service request and on the second proof.

### <Configuration of Third Embodiment>

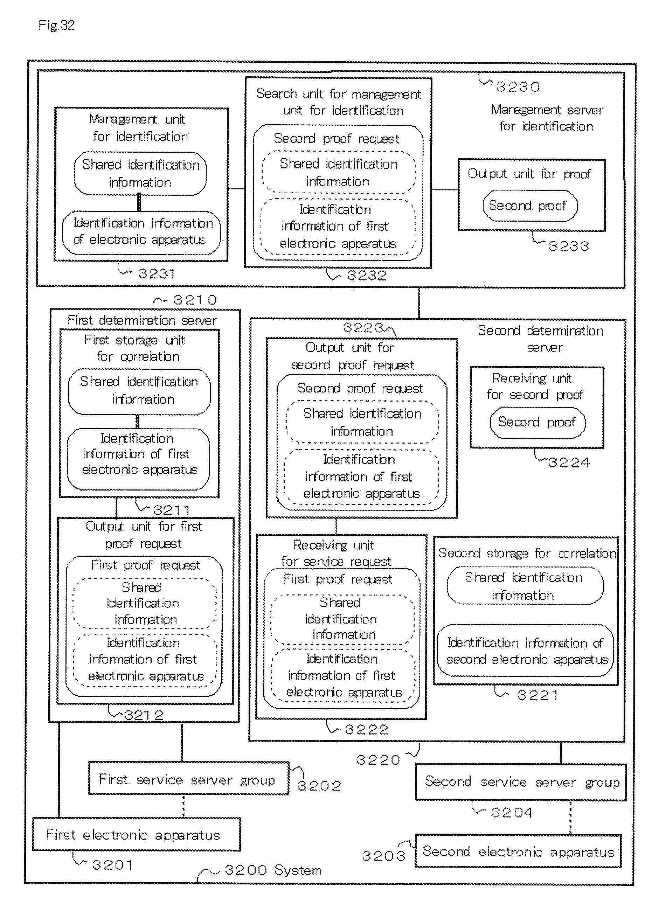

Fig. 32 is a functional block diagram of a system (3200) of the third embodiment. Therefore, a system (3200) of the third embodiment comprises a first service server group (3202), which provides a first service to a first electronic apparatus (3201) based on a first determination, a second service server group (3204), which provides a second service to a second electronic apparatus (3203) based on a second determination, the first electronic apparatus (3201), which is used by a user, and receives the first service from the first service server group (3202), the second electronic apparatus (3203), which is used by user, and receives the second service from the second service server group (3204), a first determination server (3210), which carries out a first determination of the first electronic apparatus (3201) based on identification information of first electronic apparatus in order to receive the first service from the first service server group (3202), a second determination server (3220), which carries out a second determination of the second electronic apparatus (3203) based on identification information of second electronic apparatus in order to receive said second service from the second service server group (3204), and a management server for identification (3230), in which a management unit for identification (3231) manages the shared identification information for uniquely identifying the user in the system correlated with the identification information of electronic apparatus used by the user.

In the first embodiment, communication between the first determination server (410) and the management server for identification (430) is carried out, and after that, communication between the first determination server (410) and the second determination server (420) is carried out. Meanwhile, in the third embodiment, communication between the first determination server (3210) and the second determination server (3220) is carried out, and after that, communication between the second determination server (3220) and the management server for identification (3230) is carried out.

### (Configuration of First Determination Server of Third Embodiment)

As shown in Fig. 32, the first determination server (3210) comprises a first storage unit for correlation (3211) and an output unit for first proof request (3212).

The 'first storage unit for correlation' (3211) stores the shared identification information of the user correlated with the identification information of first electronic apparatus. Therefore, the definition of the first storage unit for correlation (3211) is the same as that of the first storage unit for correlation (411) of the first embodiment.

The 'output unit for service request with proof request' (3212) outputs a first service request, including the shared identification information and the identification information of the first electronic apparatus, based on a usage request for the second determination server from the first electronic apparatus. The 'output unit for service request with proof request' (3212) carries out an initial process carried out from the first determination server to the exterior in order to implement cross-cutting use of the different independent systems, which is an objective of the present invention. An example of the usage request of the second determination server includes the case that the first electronic apparatus transmits it in order to request payment of the fee for the first service via the second determination server. Conventionally, the first electronic apparatus can receive service only in the first service system. Meanwhile, in the present invention, it is possible to receive a predetermined service in the other service system across boundaries. Specifically, it is an objective of the present invention to use the second determination server. Concretely speaking, a request for acquiring a decryption key via the second determination server in order to make encrypted content, downloaded by the second electronic apparatus, available to the first electronic apparatus, and a request for acquiring a password via the second determination server in order to make personal information (e.g., a schedule or a patient's chart), downloaded by the second electronic apparatus, available to the first electronic apparatus, are cited. Conventionally, these processes have been impossible for the first electronic apparatus. The reason for this is that the first electronic apparatus can receive service only in the first service system, and these processes are possible only for the second electronic apparatus in the second service system.

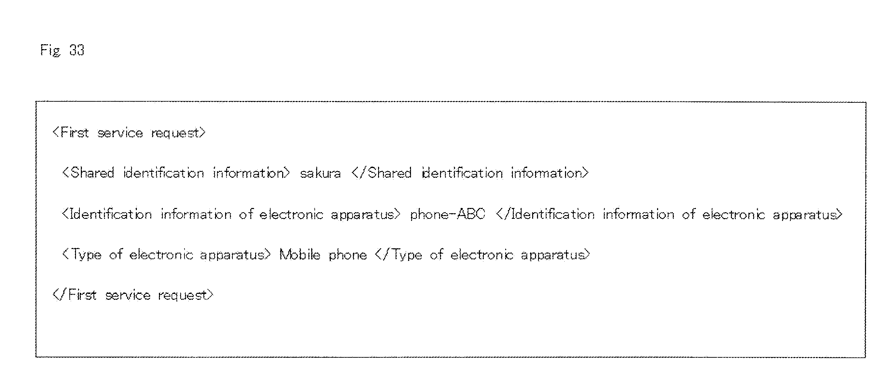

Fig. 33 is a diagram showing an example of a first service request. In Fig. 33, an example of a first service request including the shared identification information is expressed as sakura, and the identification information of the first electronic apparatus is expressed as phone-ABC.

Not indicated in Fig. 33, the first service request may include other information such as designation of a server in the second service server group, designation of a service provided by the second service server group, and charging method of a payment for the service.

### (Processing of First Determination Server of Third Embodiment)

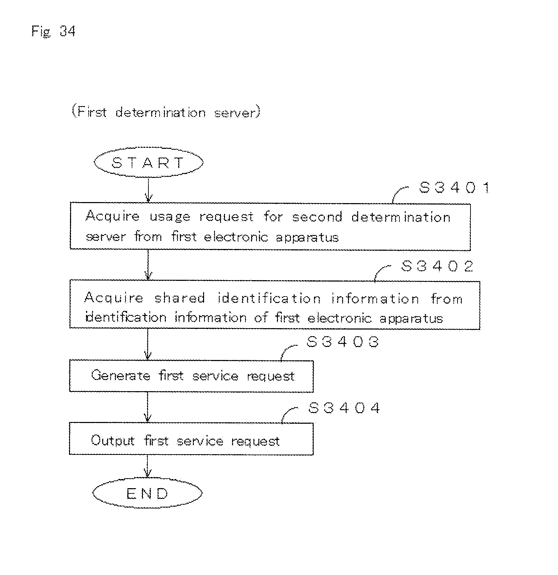

Fig. 34 is a flowchart showing processing of the first determination server of the third embodiment. The first determination server carries out processes in this flowchart every time the acquisition of the usage request for the second determination server from the first electronic apparatus becomes possible. In step S2501, the usage request for the second determination server is acquired from the first electronic apparatus. For example, read system call in communication by means of socket is executed in the output unit for first service request (3212). In step S3402, the shared identification information is acquired from the identification information of the first electronic apparatus. For example, the identification information of the first electronic apparatus, which has transmitted the usage request in step S3401, is acquired from the information indicating the communication connection, and search of the first storage unit for correlation (3211) etc. is carried out by means of the acquired identification information of the first electronic apparatus, thereby acquiring the shared identification information.

In step S3403, the first service request is generated with reference to the information acquired by steps S3401 and S3402. For example, the generated first service request may be temporarily stored in a memory. In step S3404, the first service request is outputted. For example, communication connection with the management server for identification is established, the first service request stored in the memory is read out, and by means of acquired socket, write system call is executed in the output unit for first service request (3212).

### (Configuration of Second Determination Server of Third Embodiment)

As shown in Fig. 32, the second determination server (3220) comprises the second storage unit for correlation (3221), the receiving unit for service request (3222), the output unit for second proof request (3223), and the receiving unit for second proof (3224).

The 'second storage unit for correlation' (3221) stores the shared identification information of the user correlated with the identification information of second electronic apparatus.

The 'receiving unit for service request' (3222) receives a first service request outputted from the first determination server. The proof for confirming that the user identified by the shared identification information solely exists is not added to the received first service request, so that the service cannot be immediately provided at the point of the reception of the first service request.

The 'output unit for second proof request' (3523) outputs a second proof request including the shared identification information and the identification information of first electronic apparatus based on the first service request received by the receiving unit for service request (3222). The second proof request is outputted in order to acquire proof indicating that the user identified by the shared identification information solely exists from the management server for identification. The second proof request includes the shared identification information, and may further include information for identifying the first determination server. It is assumed that the shared identification information included in the first service request is extracted, is included in the second proof request, and is outputted to the management server for identification.

As an example of the second proof request, a case acquired by replacing the two 'first proof requests' of Fig. 7(A) to 'second proof requests' is cited.

The 'receiving unit for second proof (3224) receives a second proof outputted by the management server for identification based on the second proof request outputted from the output unit for second proof request (3223). The processing in the management server for identification will be described hereinafter. The second proof indicates that the user identified by the shared identification information sorely exists. In addition, the information of the type, function, or format etc. of the first electronic apparatus, and the information proving the authenticity of the above information may be included in the second proof. In addition, in cases where the second proof outputted from the management server for identification is encrypted by the secret key of the management server for identification, the second determination server can decrypt by the public key of the management server for identification, and can confirm the content of proof.

As an example of the second proof request, a case acquired by replacing the two 'first proof requests' of Fig. 7(B) to 'second proof requests' is cited.

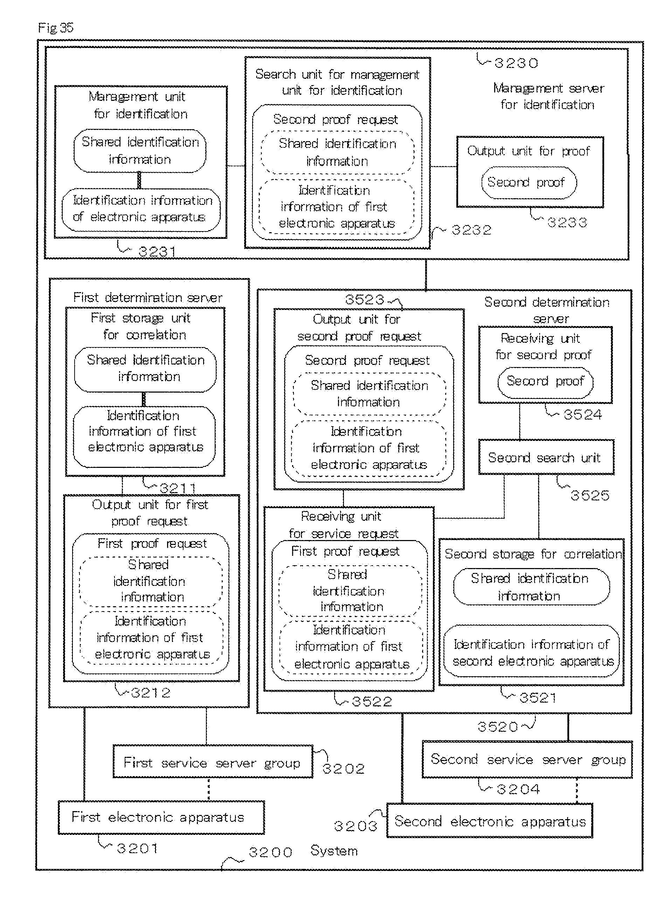

Fig. 35 is a functional block diagram of the second determination server (3520) in cases where the search is carried out by means of the shared identification information as a key based on the second proof. Comparing Fig. 35 with Fig. 32, the second search unit (3525) is added in Fig. 35.

The 'second search unit' (3525) searches the second storage unit for correlation (3521) by means of the shared identification information as a key based on the second proof received from the management server for identification. In the search by means of the shared identification information as a key, the shared identification information included in the second proof is extracted, and it is searched as to whether shared identification information corresponding to the extracted information is stored in the second storage unit for correlation. If the matching shared identification information is acquired, service (e.g., payment of the fee for the first service, transmission of decryption key of encrypted content, or transmission of password) may be provided according to the service request with proof. Further, the search result may be transmitted to the first determination server, or to the second electronic apparatus (via the second service server group). In addition, in cases where the information of the type, function, or format etc. of the first electronic apparatus is included in the second proof, the second search unit (3525) can carry out the search by means of the above information.

### (Processing of Second Determination Server of Third Embodiment)

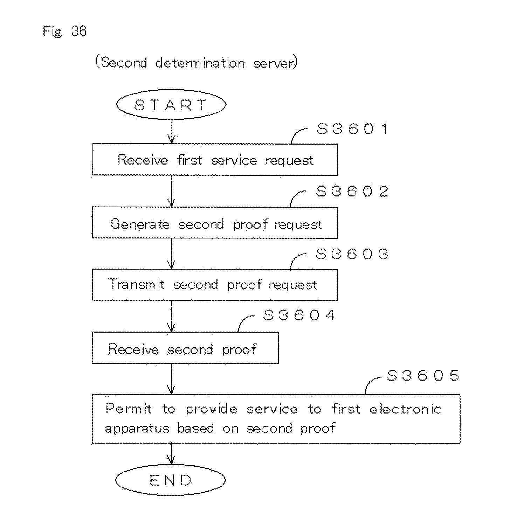

Fig. 36 is a flowchart showing processing of the second determination server of the third embodiment. The second determination server carries out processes in this flowchart of Fig. 36 every time reception of the first service request becomes possible. In step S3601, the first service request is received. After detecting the availability of reception of the first service request, communication connection with the first determination server is established, so that read system call by means of the acquired socket is executed in the receiving unit for first service request (3222). In step S3602, the second proof request is generated. This generation is carried out based on the content of the service request received in step S3601 with reference to the shared identification information and the identification information of first electronic apparatus included in the service request. The generated second proof request is temporarily stored in a memory etc., for example. In step S3603, the second proof request is transmitted. This transmission is carried out by establishing communication connection with the first determination server, and executing write system call in the output unit for second proof request (3223) by means of the socket acquired by the establishment. In step S3604, the second proof is received. This reception is carried out by executing read system call in the receiving unit for second proof request (3224) by means of the socket.

In step S3605, it is permitted to provide the service to the first electronic apparatus based on the received second proof. For example, the presence of the share identification information is confirmed by the second proof, so that it is confirmed that the second user exists and there is no problem in service provision to the first electronic apparatus (3201) used by the user. Therefore, it is possible to confirm that the user of the first electronic apparatus, through which the operation as the trigger of receiving the service request with proof, is the user who uses the second electronic apparatus, which receives the service based on the determination by the second determination server. Therefore, a charge process of the payment for the service etc. can be carried out in the second determination server's side. In addition, similar to the first embodiment, in this step, it may be confirmed whether the type, function, or format of the first electronic apparatus etc. is suitable for the service provision.

### <Configuration of Management Server for Identification of Third Embodiment >

As shown in Fig. 32, the management server for identification (3230) comprises a management unit for identification (3231), a search unit for management unit for identification (3232), and an output unit for proof (3233).

The 'management unit for identification' (3231) manages shared identification information for uniquely identifying the user in the system correlated with the identification information of electronic apparatus used by the user. The shared identification information is issued according to preliminary registration by a user, and is given to the first and second determination servers. Note that various distribution channels for providing the shared identification information to the determination server may exist, and it is not limited to one. By means of the shared identification information, it is proved that the identification information of the user, which is necessary to use more than or equal to two services, is unique.

The 'search unit for management unit for identification' (3232) searches the management unit for identification (3231) based on the second proof request outputted by the second determination server. The shared identification information and the identification information of electronic apparatus included in the second proof request are extracted, and search as to whether the shared identification information and the identification information of electronic apparatus corresponding thereto is managed in the management unit for identification is carried out. In addition, if the corresponding shared identification information and the identification information of electronic apparatus are acquired, search by means of the identification information of second determination server included in the service request with proof request may be subsequently carried out. In this case, it is assumed that the identification information of the second determination server is correlated with the identification information of electronic apparatus, and is managed in the management unit for identification (3231) In addition, similar to the first embodiment, if the type, function, or format etc. of the first electronic apparatus is also managed, search for the type, function, or format etc. of the electronic apparatus by means of the identification information of electronic apparatus may be carried out.

The 'output unit for proof' (3233) outputs the second proof based on a search result by the search unit for management unit for identification. In cases where the uniquely matching shared identification information is acquired in the search by the search unit for management unit for identification, it is proved that the user identified by the shared identification information solely exists. The search result indicating the uniqueness of the shared identification information is necessary. The second proof is outputted only when the matching shared identification information is acquired in the search by the search unit for management unit for identification. If the matching shared identification information is not acquired, information indicating that may be separately outputted. The output destination of the second proof is the second determination server. Further, the second proof outputted to the second determination server may be encrypted by a private key of the management server for identification. In this case, the second determination server, which receives the second proof, carries out decryption by the public key of the management server for identification, and if the proof is confirmed, it is possible to prevent falsification and impersonation.

### (Processing of Management Server for Identification of Third Embodiment)

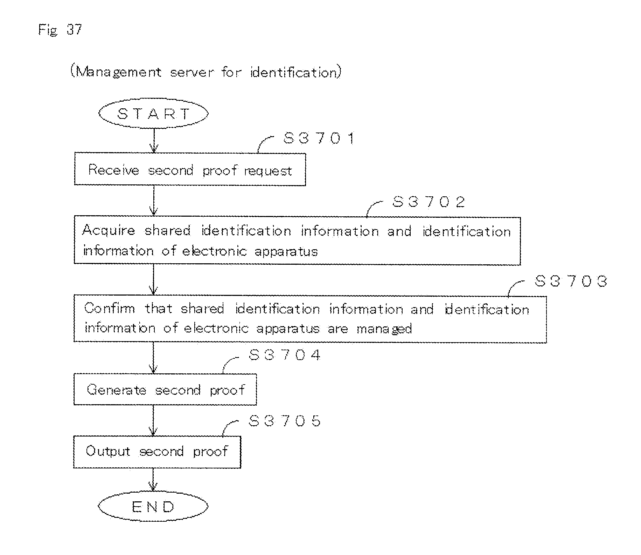

Fig. 37 is a flowchart showing processing of the management server for identification in the system of the third embodiment. The management server for identification carries out processes in this flowchart every time reception of the second proof request becomes possible. In step S3701, the second proof request is received, In this step, for example, by means of the socket generated in accordance with a request for establishment of the communication connection from the second determination server, read system call is executed in the search unit for management unit for identification (3232). In step S3702, the shared identification information and the identification information of electronic apparatus included in the second proof request are acquired. The acquired result is temporarily stored in a memory, for example. In addition, in this step, the information indicating request for execution of the service included in the service request with proof request is also acquired, and may be temporarily stored in a memory. In step S3703, it is confirmed that the shared identification information and the identification information of electronic apparatus are managed by the management unit for identification (3231). This step is executed, for example, by searching the data stored and managed in the management unit for identification (3231) by the search unit for management unit for identification (3232). In step S3704, based on the result of the step S3703, the second proof is generated. The generated second proof is temporarily stored in a memory etc. In step S3705, the second proof generated in step S3704 is outputted to the second determination server. In this step, for example, by means of the communication connection established in the step S3701, write system call is executed in the output unit for proof.

### (Processing of Entire System of Third Embodiment)

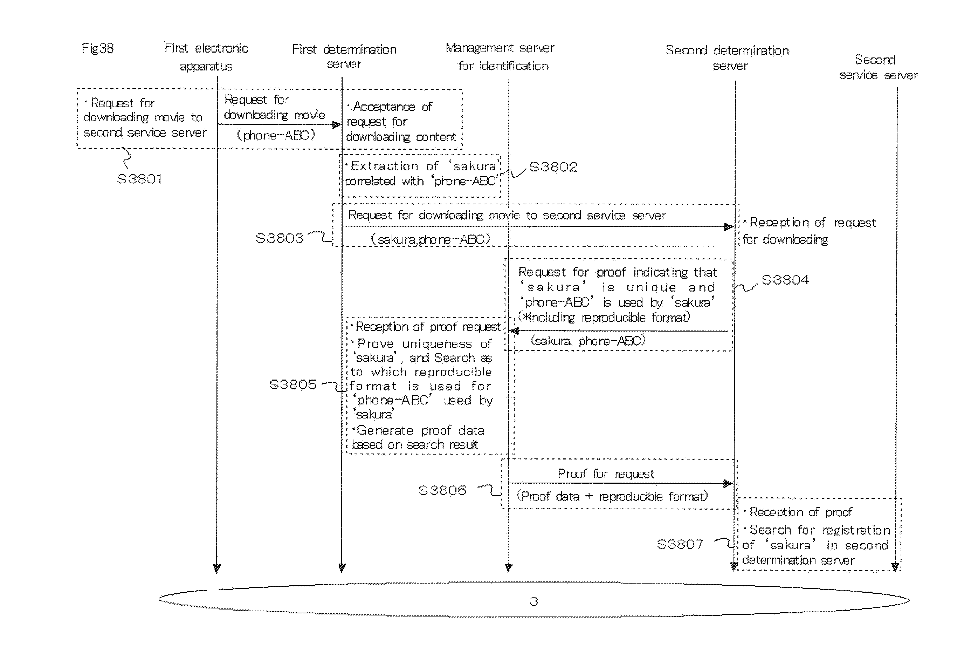

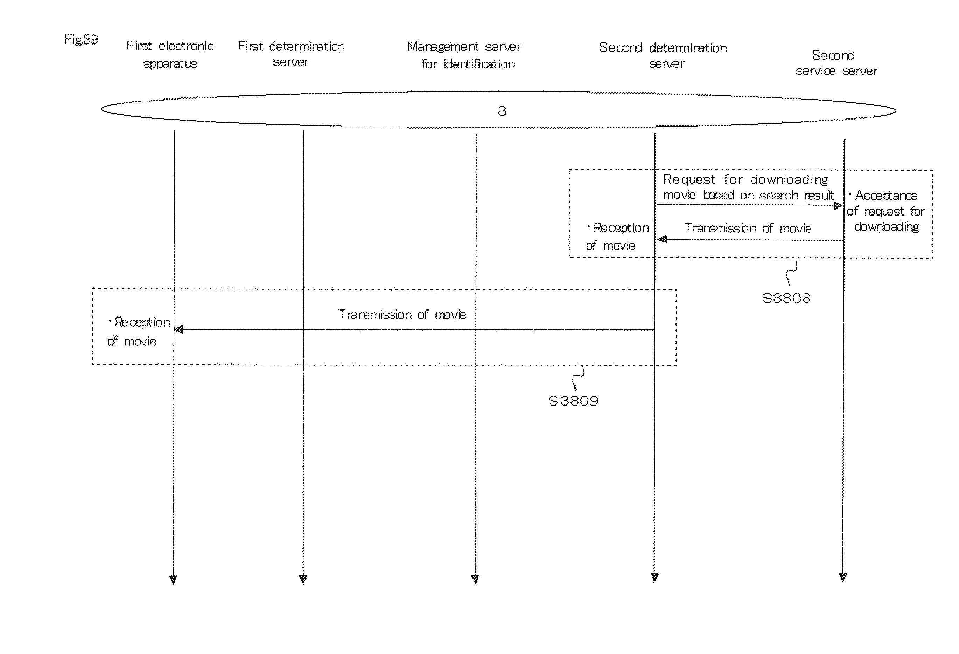

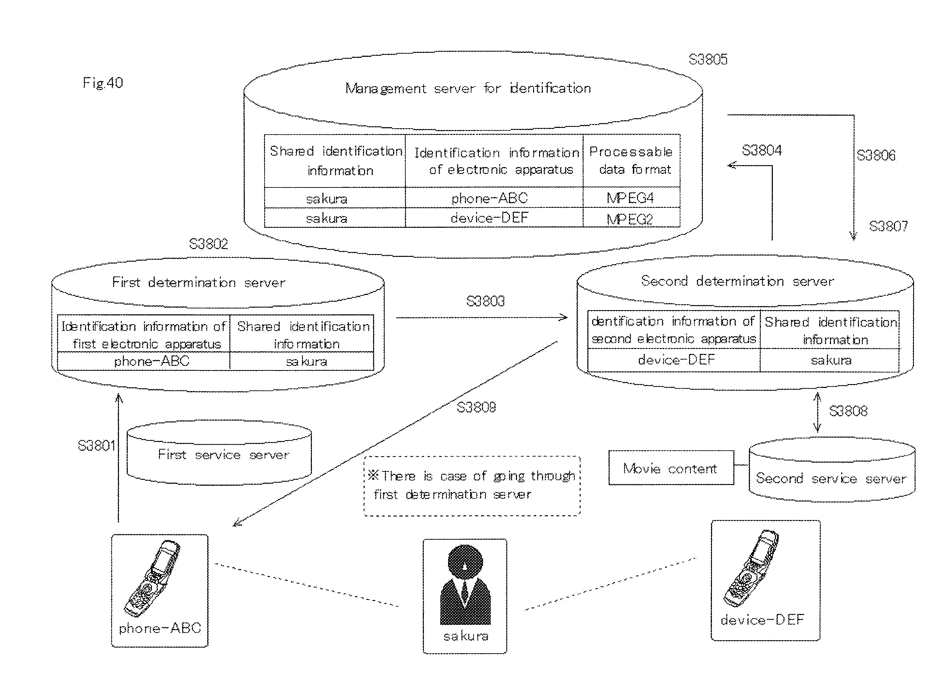

Figs. 38 and 39 are sequential diagrams showing concrete examples of data flow of the entire system of the third embodiment. Fig. 40 is a diagram showing the overall processing of the entire system as shown in Figs. 38 and 39. In this example, as the usage request, a request for DL of movie to the second service server in order to view the movie, which the user views by the second electronic apparatus, via the first electronic apparatus is cited. Specifically, in cases where the first electronic apparatus is a mobile phone capable of viewing the movie of MPEG4 format, and the second electronic apparatus is a digital TV capable of viewing the movie of MPEG2 format, the request is executed in order to view the movie, which is viewed by the second electronic apparatus, via the first electronic apparatus. In step S3801, a usage request for the second determination server (DL request for movie from the second service server, a portion of the second service server group) is outputted from the first electronic apparatus to the first determination server, and is acquired by the first determination server. Subsequently, in the first determination server, which has accepted the DL request (usage request), the shared identification information (sakura) correlated with the identification information of first electronic apparatus (phone-ABC) is extracted (S3802). After that, the first determination server generates the first service request from the acquired usage request, and the first service request (DL request for movie to the second service server) including the shared identification information (sakura) and the identification information of first electronic apparatus (phone-ABC) is outputted to the second determination server (S3803).

The DL request for movie is received by the second determination server. After that, the second proof request is generated from the first service request, and the second proof request is transmitted to the management server for identification (S3804). In step S3804, proof request as to the uniqueness of 'sakura' identified by the shared identification information, and as to that the electronic apparatus identified as 'phone-ABC' is used by 'sakura', is outputted with the shared identification information (sakura) and the identification information of first electronic apparatus (phone-ABC). Moreover, in this case, proof of a reproducible format for the apparatus phone-ABC can be requested.

In the management server for identification, search of the identification information of electronic apparatus is carried out by means of the information included in the second proof request, and the second proof is generated and outputted to the second determination server (S3806). In step S3806, information regarding the reproducible format for the apparatus phone-ABC acquired by the search included in the proof is also transmitted.

Subsequently, the second determination server carries out acquisition, and confirms the authenticity of the second proof by searching the second storage unit for correlation, for example (S13807). Specifically, search as to whether 'sakura' is registered (is correlated with the identification information of second electronic apparatus and stored) in the second determination server.

Subsequently, in Fig. 39, DL request for movie is outputted from the second determination server to the second service server based on the search result. In this case, a notification of the reproducible format for the first electronic apparatus may be carried out. Subsequently, the second service server, which has received it, distributes the movie in the reproducible format for the first electronic apparatus to the second determination server (S3808). Subsequently, the movie is distributed from the second determination server to the first electronic apparatus (S3809). In addition, step S3809 may be carried out via the first determination server. Moreover, the movie may be directly distributed from the second service server to the first electronic apparatus.

### <Configuration for Implementing Third Embodiment>

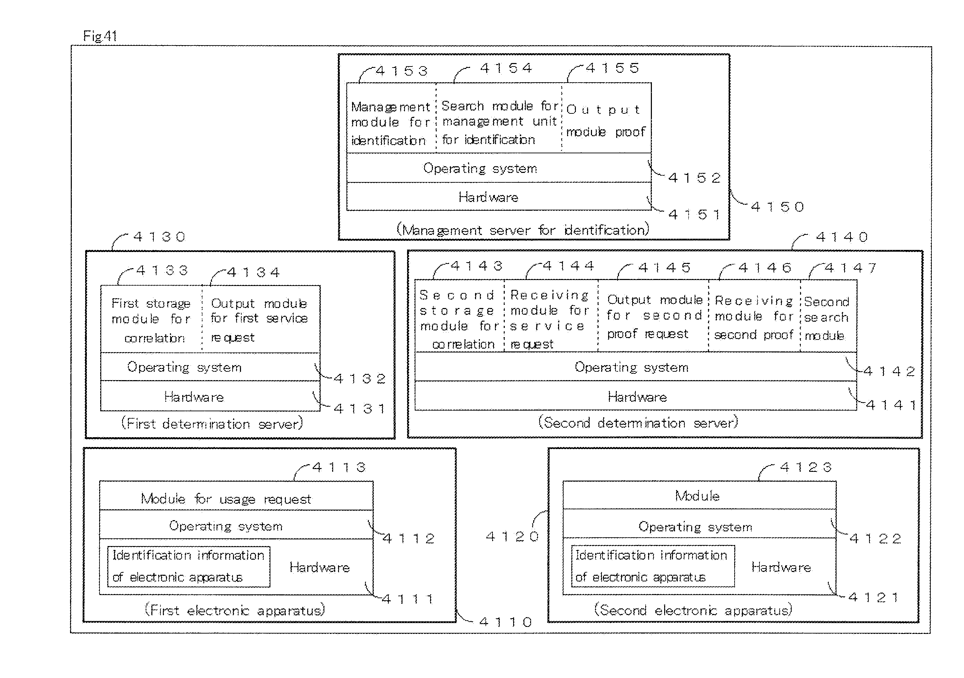

Fig. 41 is a diagram showing an example of configuration for implementing the third embodiment. The second determination server (4140) is explained. A physical configuration of the second determination server (4140) is implemented by the hardware (4140) configured by a CPU, a memory, a hard disk, an input/output device, a network interface etc. Logically speaking, an operating system (4142), basic software for abstraction of functions of the hardware (4141), or for managing operation of the hardware (4141) is operated, and a program configured by including modules such as the second storage module for correlation (4143), the receiving module for service request (4141), the output module for second proof request (4145), the receiving module for second proof (4146), and the second search module (4147), which are for implementing the second storage unit for correlation (3221), the receiving unit for service request (3222), the output unit for second proof request (3223), the receiving unit for second proof (3224), and the second search unit (3225), respectively, is operated in the software. This program executes the processing of Fig. 36, for example. Note that the second search module (325) is not essential for the configuration for implementing.

Note that, as to the first determination server (4130) and the management server for identification (4150), an operating system runs on the hardware, and program including modules for implementing the components is operated thereon, so that it is possible to implement. Note that, as to the first electronic apparatus (4110) and the second electronic apparatus (4120), similar to the respective servers, an operating system runs on the hardware, and program including modules for implementing the components is operated thereon, so that it is possible to implement. Further, in the electronic apparatus, the identification information of electronic apparatus correlated with the hardware (4111 and 4121) is stored.

### <Brief Description of Effects of Third Embodiment>

This embodiment is, similar to the first embodiment, configured by the service server group, the electronic apparatus, the determination server, and the management server for identification. However, the embodiment is different from the first embodiment in that based on a usage request for the second determination server from the first electronic apparatus, the second determination server, which has received the first service request outputted from the first determination server, carries out a search of a management unit for identification, and outputs the second service request to the management server for identification, and the management server for identification carries out search of the management unit for identification, thereby outputting the proof based on the search result. In the above configuration, the management of user identification is carried out by incorporating a vertical-integrated system including the first electronic apparatus, the first service server, and the first determination server, with another vertical-integrated system, thereby flexibly providing service. In this case, even if the service request is sent from a server, which has no relationship of trust, the proof is given from the management server for identification, so that it is possible to establish reliability in the system, thereby ensuring safety in the service provision. Moreover, it is possible to provide a service only to an electronic apparatus belonging to scope of function or format desired by the service provider managing the second service server group.

### INDUSTRIAL APPLICABILITY

According to the above-described present invention, it becomes unnecessary that one electronic apparatus is bound by one service system, thereby removing boundaries between service systems. In addition, for the service provider, it is possible to appropriately provide the service to the electronic apparatus belonging to a plurality of service systems.

### BRIEF DESCRIPTION OF THE DRAWINGS

Fig. 1 is a diagram showing a case of requesting a service across boundaries between service provision systems in the conventional system.
Fig. 2 is a diagram explaining a concept of the present invention.
Fig. 3 is a conceptual diagram of a first embodiment.
Fig. 4 is a functional block diagram of the entire system of the first embodiment.
Fig. 5 is a diagram showing an example of information stored and managed by a management unit for identification of a management server for identification in a system of the first embodiment.
Fig. 6 is a diagram showing an example of a table stored by a first storage for correlation of a first determination server in the system of the first embodiment.
Fig. 7 is a diagram showing an example of a first proof request and a first proof.
Fig. 8 is a diagram showing an example of a service request with proof.
Fig. 9 is a flowchart showing processing of a first determination server in the system of the first embodiment.
Fig. 10 is a diagram showing an example of a table stored by a second storage for correlation of a second determination server in the system of the first embodiment.
Fig. 11 is a second functional block diagram of the system of the first embodiment.
Fig. 12 2 is a flowchart showing processing of a second determination server in the system of the first embodiment.
Fig. 13 is a flowchart showing processing of a management server for identification in the system of the first embodiment.
Fig. 14 is a first sequence diagram showing processing of the entire system of the first embodiment.
Fig. 15 is a second sequence diagram showing processing of the entire system of the first embodiment.
Fig. 16 is a diagram showing overall processing of the entire system of the first embodiment.
Fig. 17 is a diagram showing an example of configuration of server etc. for implementing the first embodiment.
Fig. 18 is a diagram showing a hardware configuration of server etc, of the first embodiment.
Fig. 19 is a conceptual diagram of a second embodiment.
Fig. 20 is a functional block diagram of the entire system of the second embodiment.
Fig. 21 is a diagram showing an example of a service request with proof request.
Fig. 22 is a flowchart showing processing of a first determination server in the system of the second embodiment.
Fig. 23 is a diagram showing an example of a second service request with proof.
Fig. 24 is a second functional block diagram of the system of the second embodiment.
Fig. 25 is a flowchart showing processing of a second determination server in the system of the second embodiment.
Fig. 26 is a flowchart showing processing of a management server for identification in the system of the second embodiment.
Fig. 27 is a first sequence diagram showing processing of an entire system of the second embodiment.
Fig. 28 is a second sequence diagram showing processing of the entire system of the second embodiment.
Fig. 29 is a diagram showing overall processing of the entire system of the second embodiment.
Fig. 30 is a diagram showing an example of configuration of server etc. for implementing the second embodiment.
Fig. 31 is a conceptual diagram of a third embodiment.
Fig. 32 is a functional block diagram of the entire system of the third embodiment.
Fig. 33 is a diagram showing an example of a first service request.
Fig. 34 is a flowchart showing processing of a first determination server in the system of the third embodiment.
Fig. 35 is a second functional block diagram of the second embodiment.
Fig. 36 is a flowchart showing processing of a second determination server in the system of the third embodiment.
Fig. 37 is a flowchart showing processing of a management server for identification in the system of the third embodiment.
Fig. 38 is a first sequence diagram showing processing of an entire system of the third embodiment.
Fig. 39 is a second sequence diagram showing processing of the entire system of the third embodiment.
Fig. 40 is a diagram showing overall processing of the entire system of the third embodiment.
Fig. 41 is a diagram showing an example of configuration of server etc. for implementing the third embodiment.

### Description of Reference Numerals

401 First electronic apparatus
402 First service server group
403 Second electronic apparatus
404 Second service server group
410 First determination server
411 First storage unit for correlation
412 Output unit for first proof request
413 Receiving unit for first proof
414 Output unit for service request with proof
420 Second determination server
421 Second storage unit for correlation
422 Receiving unit for service request with proof
430 Management server for identification
431 Management unit for identification
432 Search unit for management unit for identification
433 Output unit for proof

## Claims

1. A system, comprising:
a first service server group, which provides a first service to a first electronic apparatus based on a first determination;
a second service server group, which provides a second service to a second electronic apparatus based on a second determination;
a first electronic apparatus, which is used by a user, and receives the first service from the first service server group;
a second electronic apparatus, which is used by said user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages shared identification information for uniquely identifying the user in the system correlated with identification information of electronic apparatus used by said user,
wherein the first determination server comprises
a first storage unit for correlation, which stores the shared identification information of the user correlated with the identification information of first electronic apparatus,
an output unit for first proof request, which outputs the first proof request, including the shared identification information and the identification information of first electronic apparatus, based on a usage request for the second determination server from the first electronic apparatus,
a receiving unit for first proof, which receives the first proof returned from the management server for identification in accordance with the first proof request outputted from said output unit for first proof request, and
an output unit for service request with proof, which outputs the service request with proof including the shared identification information based on the first proof received by said receiving unit for first proof,
the second determination server comprises
a second storage unit for correlation, which stores the shared identification information of the user correlated with the identification information of the second electronic apparatus, and
a receiving unit for service request with proof, which receives the service request with proof, and
the management server for identification comprises
a search unit for management unit for identification, which searches the management unit for identification based on the first proof request outputted by the first determination server, and
an output unit for proof, which outputs the first proof based on a search result by the search unit for management unit for identification.

2. The system according to Claim 1,
wherein the second determination server further comprises
a second search unit, which searches the second storage unit for correlation by means of the shared identification information as a key based on the service request with proof received by the receiving unit for service request with proof.

3. A system, comprising:
a first service server group, which provides a first service to a first electronic apparatus based on a first determination;
a second service server group, which provides a second service to a second electronic apparatus based on a second determination;
a first electronic apparatus, which is used by a user, and receives the first service from the first service server group;
a second electronic apparatus, which is used by said user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages shared identification information for uniquely identifying the user in the system correlated with identification information of electronic apparatus used by said user,
wherein the first determination server comprises
a first storage unit for correlation, which stores the shared identification information of the user correlated with the identification information of the first electronic apparatus, and
an output unit for service request with proof request, which outputs the service request with proof request, including the identification information of the second determination server, the shared identification information, and the identification information of first electronic apparatus, based on a usage request for the second determination server from the first electronic apparatus,
the second determination server comprises
a second storage unit for correlation, which stores the shared identification information of the user correlated with the identification information of second electronic apparatus, and
a receiving unit for second service request with proof, which receives the second service request with proof outputted by the management server for identification, and
the management server for identification comprises
a receiving unit for service request with proof request, which receives the service request with proof request outputted by the first determination server,
a search unit for management unit for identification, which searches the management unit for identification by means of the shared identification information and the identification information of electronic apparatus as a key, and
an output unit for second service request with proof, which outputs the second service request with proof based on the search result by the search unit for management unit for identification.

4. The system according to Claim 3,
wherein the second determination server further comprises
a second search unit, which searches the second storage unit for correlation by means of the shared identification information as a key based on the second service request with proof received from the management server for identification.

5. A system, comprising:
a first service server group, which provides a first service to a first electronic apparatus based on a first determination;
a second service server group, which provides a second service to a second electronic apparatus based on a second determination;
a first electronic apparatus, which is used by a user, and receives the first service from the first service server group;
a second electronic apparatus, which is used by said user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages shared identification information for uniquely identifying the user in the system correlated with identification information of electronic apparatus used by said user,
wherein the first determination server comprises
a first storage unit for correlation, which stores the shared identification information of the user correlated with the identification information of the first electronic apparatus,
an output unit for first service request, which outputs the first service request including the shared identification information and the identification information of first electronic apparatus based on a usage request for the second determination server from the first electronic apparatus,
the second determination server comprises,
a second storage unit for correlation, which stores the shared identification information of the user correlated with the identification information of the second electronic apparatus,
a receiving unit for service request, which receives the first service request outputted from the first determination server,
an output unit for second proof request, which outputs the second proof request including the shared identification information and the identification information of first electronic apparatus based on the first service request received by the receiving unit for service request, and
a receiving unit for second proof, which receives the second proof outputted by the management server for identification based on the second proof request outputted from said output unit for second proof request, and
the management server for identification comprises
a search unit for management unit for identification, which searches the management unit for identification based on the second proof request outputted by the second determination server, and
an output unit for proof, which outputs the second proof based on the search result by the search unit for management unit for identification.

6. The system according to Claim 5, wherein,
the second determination server further comprises
a second search unit, which searches the second storage unit for correlation by means of the shared identification information as a key based on the first service request received by the receiving unit for service request, and on the second proof received by the receiving unit for second proof.

7. The first determination server according to Claim 1.

8. The management server for identification according to Claim 1.

9. A management method for user identification, including a system comprising
a first service server group, which provides a first service to a first electronic apparatus based on a first determination;
a second service server group, which provides a second service to a second electronic apparatus based on a second determination;
a first electronic apparatus, which is used by a user, and receives the first service from the first service server group;
a second electronic apparatus, which is used by said user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages shared identification information for uniquely identifying the user in the system correlated with identification information of electronic apparatus used by said user,
wherein the first determination server comprises
a first storage unit for correlation, which stores the shared identification information of the user correlated with the identification information of the first electronic apparatus, and executes
a step of outputting first proof request, which outputs the first proof request, including the shared identification information and the identification information of first electronic apparatus, based on a usage request for the second determination server from the first electronic apparatus,
a step of receiving first proof, which receives the first proof returned from the management server for identification in accordance with the first proof request outputted from said step of outputting first proof request, and
a step of outputting service request with proof, which outputs the service request with proof including the shared identification information based on the first proof received by said step of receiving first proof,
the second determination server comprises
a second storage unit for correlation, which stores the shared identification information of the user correlated with the identification information of the second electronic apparatus, and executes
a step of receiving service request with proof, which receives the service request with proof, and
the management server for identification executes
a step of searching management unit for identification, which searches the management unit for identification based on the first proof request outputted by the first determination server, and
a step of outputting first proof, which outputs the first proof based on a search result by the step of searching management unit for identification.

10. The first determination server according to Claim 3.

11. The management server for identification according to Claim 3.

12. A management method for user identification, including a system comprising
a first service server group, which provides a first service to a first electronic apparatus based on a first determination;
a second service server group, which provides a second service to a second electronic apparatus based on a second determination;
a first electronic apparatus, which is used by a user, and receives the first service from the first service server group;
a second electronic apparatus, which is used by said user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages shared identification information for uniquely identifying the user in the system correlated with identification information of electronic apparatus used by said user,
wherein the first determination server comprises
a first storage unit for correlation, which stores the shared identification information of the user correlated with the identification information of the first electronic apparatus, and executes
a step of outputting service request with proof request, which outputs the service request with proof request including the identification information of the second determination server and the shared identification information based on a usage request for the second determination server from the first electronic apparatus,
the second determination server comprises
a second storage unit for correlation, which stores the shared identification information of the user correlated with the identification information of second electronic apparatus, and executes
a step of receiving for second service request with proof, which receives the second service request with proof outputted by the management server for identification, and
the management server for identification executes
a step of receiving service request with proof request, which receives the service request with proof request outputted by the first determination server,
a step of searching management unit for identification, which searches the management unit for identification by means of the shared identification information and the identification information of electronic apparatus as a key based on the service request with proof request received by the step of receiving service request with proof request, and
a step of outputting second service request with proof, which outputs the second service request with proof based on the search result by the step of searching management unit for identification.

13. The first determination server according to Claim 5.

14. The second determination server according to Claim 5.

15. The management server for identification according to Claim 5.

16. A management method for user identification, including a system comprising
a first service server group, which provides a first service to a first electronic apparatus based on a first determination;
a second service server group, which provides a second service to a second electronic apparatus based on a second determination;
a first electronic apparatus, which is used by a user, and receives the first service from the first service server group;
a second electronic apparatus, which is used by said user, and receives the second service from the second service server group;
a first determination server, which carries out the first determination of the first electronic apparatus based on identification information of the first electronic apparatus in order to receive said first service from the first service server group;
a second determination server, which carries out the second determination of the second electronic apparatus based on identification information of the second electronic apparatus in order to receive said second service from the second service server group; and
a management server for identification, in which a management unit for identification manages shared identification information for uniquely identifying the user in the system correlated with identification information of electronic apparatus used by said user,
wherein the first determination server comprises
a first storage unit for correlation, which stores the shared identification information of the user correlated with the identification information of the first electronic apparatus, and executes
a step of outputting first service request, which outputs the first service request including the shared identification information and the identification information of first electronic apparatus based on a usage request for the second determination server from the first electronic apparatus,
the second determination server comprises,
a second storage unit for correlation, which stores the shared identification information of the user correlated with the identification information of second electronic apparatus, and executes
a step of receiving service request, which receives the first service request outputted from the first determination server,
a step of outputting second proof request, which outputs the second proof request including the shared identification information and the identification information of first electronic apparatus based on the first service request received by the step of receiving service request, and
a step of receiving second proof, which receives the second proof outputted by the management server for identification based on the second proof request outputted by said step of outputting second proof request, and
the management server for identification executes
a step of searching management unit for identification, which searches the management unit for identification based on the second proof request outputted by the second determination server, and
a step of outputting proof, which outputs the second proof based on the search result by the step of searching management unit for identification.
